(19) Europäisches Patentamt
European Patent Office
Office européen des brevets

(11) **EP 2 268 576 B2**

(12) **NOUVEAU FASCICULE DE BREVET EUROPEEN**
Après la procédure d'opposition

(45) Date de publication et mention de la décision concernant l'opposition:
**14.09.2022   Bulletin 2022/37**

(45) Mention de la délivrance du brevet:
**28.12.2016   Bulletin 2016/52**

(21) Numéro de dépôt: **09720185.9**

(22) Date de dépôt: **09.03.2009**

(51) Classification Internationale des Brevets (IPC):
**C01B 33/12** (2006.01)   **C01B 33/193** (2006.01)

(52) Classification Coopérative des Brevets (CPC):
**C01B 33/193;** C01B 33/12

(86) Numéro de dépôt international:
**PCT/EP2009/052726**

(87) Numéro de publication internationale:
**WO 2009/112458 (17.09.2009 Gazette 2009/38)**

(54) **NOUVEAU PROCEDE DE PREPARATION DE SILICES PRECIPITEES, SILICES PRECIPITEES A MORPHOLOGIE, GRANULOMETRIE ET POROSITE PARTICULIERES ET LEURS UTILISATIONS, NOTAMMENT POUR LE RENFORCEMENT DE POLYMERES**

**NEUES VERFAHREN ZUR HERSTELLUNG VON FÄLLUNGSKIESELSÄURE, FÄLLUNGSKIESELSÄURE MIT SPEZIELLER MORPHOLOGIE, GARNULOMETRIE UND POROSITÄT UND VERWENDUNG DAVON, INSBESONDERE ZUR VERSTÄRKUNG VON POLYMEREN**

**NOVEL METHOD FOR PREPARING PRECIPITATED SILICA, PRECIPITATED SILICA HAVING PARTICULAR MORPHOLOGY, GRADING AND POROSITY, AND USE THEREOF PARTICULARLY FOR REINFORCING POLYMERS**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **10.03.2008   FR 0801289**

(43) Date de publication de la demande:
**05.01.2011   Bulletin 2011/01**

(73) Titulaire: **RHODIA OPERATIONS**
**69003 Lyon (FR)**

(72) Inventeurs:
• **ALLAIN, Emmanuelle**
**F-94240 L'hay les Roses (FR)**
• **HERNANDEZ, Julien**
**F-92160 Antony (FR)**
• **VENTELON, Lionel**
**B-7181 Seneffe (BE)**
• **GUY, Laurent**
**F-69140 Rillieux la Pape (FR)**
• **AIRIAU, Marc**
**F-92500 Rueil-Malmaison (FR)**

(74) Mandataire: **Lederer & Keller Patentanwälte Partnerschaft mbB**
**Unsöldstraße 2**
**80538 München (DE)**

(56) Documents cités:
| | |
|---|---|
| EP-A- 0 520 862 | WO-A-2008/077948 |
| WO-A1-03/016215 | WO-A1-03/016387 |
| WO-A1-2004/014795 | WO-A1-2004/014796 |
| WO-A1-2004/014797 | WO-A1-2009/112463 |
| FR-A- 2 562 534 | FR-A- 2 710 629 |
| FR-A- 2 710 630 | FR-A- 2 763 581 |

EP 2 268 576 B2

**Description**

La présente invention concerne un nouveau procédé de préparation de silice précipitée à morphologie, granulométrie et porosité particulières, se présentant notamment sous forme de poudre, de billes sensiblement sphériques ou de granulés.

Il est connu d'employer des charges blanches renforçantes dans les polymères, en particulier les élastomères, comme par exemple de la silice précipitée.

Le but de l'invention est de proposer notamment une charge alternative pour les compositions de polymères, aux caractéristiques atypiques, leur procurant de plus un compromis de propriétés très satisfaisant, en particulier au niveau de leurs propriétés rhéologiques, mécaniques et dynamiques, notamment hystérétiques. Elle permet de manière avantageuse une amélioration du compromis hystérèse/renforcement.

FR 2710629A concerne un procédé de préparation de silice précipitee comprenant la réaction d'un silicate avec un agent acidifiant comprenant les étapes suivantes:

a) préparation d'un pied de cuve initial comportant une partie totale du silicate de métal alcalin M engagé dans la réaction, la concentration en silice dans ledit pied de cuve étant inferieure a 20 g/l

b) ajout au pied de cuve d'un agent aciditiant, ce par quoi l'on obtient une suspension de silice précipitee

c) ajout au milieu réactionnel simultanément du silicate et de l'agent aciditiant jusqu'a obtention d'une valeur du pH comprise entre 3 et 6,5.

L'invention propose d'abord un nouveau procédé de préparation de silice précipitée comprenant la réaction d'un silicate avec un agent acidifiant ce par quoi l'on obtient une suspension de silice, puis la séparation et le séchage de cette suspension, caractérisé en ce que la réaction du silicate avec l'agent acidifiant est réalisée selon les étapes successives suivantes :

(i) on met en contact (mélange) une suspension aqueuse de silice précipitée, présentant un pH compris entre 2,5 et 5,3, avec de l'agent acidifiant et du silicate, de telle manière que le pH du milieu réactionnel soit maintenu entre 2,5 et 5,3,

(ii) on ajoute dans le milieu réactionnel obtenu un agent alcalin, de préférence du silicate, et ce de manière à augmenter le pH du milieu réactionnel jusqu'à une valeur comprise entre 4,7 et 6,3.

Selon un mode de réalisation préféré du procédé de l'invention, la suspension aqueuse de silice précipitée, utilisée dans l'étape (i), est préparée de la manière suivante :

(1) on forme un pied de cuve initial comportant du silicate et un électrolyte, la concentration en silicate (exprimée en $SiO_2$) dans ledit pied de cuve initial étant inférieure à 100 g/L, en particulier inférieure à 80 g/L, et, de manière préférée, la concentration en électrolyte dans ledit pied de cuve initial étant inférieure à 17 g/L, en particulier inférieure à 15 g/L,

(2) on ajoute de l'agent acidifiant audit pied de cuve jusqu'à l'obtention d'une valeur du pH du milieu réactionnel d'au moins environ 7, de préférence comprise entre 7,5 et 8,5,

(3) on ajoute au milieu réactionnel, simultanément, de l'agent acidifiant et du silicate,

(4) on arrête l'addition du silicate tout en continuant l'addition de l'agent acidifiant dans le milieu réactionnel, jusqu'à l'obtention d'une valeur du pH du milieu réactionnel comprise entre 2,5 et 5,3, de préférence entre 2,8 et 4,9.

Il a été ainsi trouvé que l'enchaînement d'étapes spécifiques, au niveau du procédé selon l'invention, et notamment au niveau de son mode de réalisation préféré décrit ci-dessus, constituait une condition importante pour conférer aux produits obtenus leurs caractéristiques et propriétés particulières.

Dans le procédé selon l'invention, et en particulier dans son mode de réalisation préféré, le choix de l'agent acidifiant, de l'agent alcalin et du silicate se fait d'une manière bien connue en soi.

On utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/L, par exemple entre 60 et 130 g/L.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration (exprimée en $SiO_2$) comprise entre 40 et 330 g/L, par exemple entre 60 et 300 g/L, en particulier entre 60 et 260 g/L.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral $SiO_2/Na_2O$ compris entre 2,5 et 4, par exemple entre 3,2 et 3,8.

L'agent alcalin employé lors de l'étape (ii) peut être par exemple une solution de soude, de potasse ou d'ammoniac. De préférence, cet agent alcalin est du silicate, en particulier du silicate tel qu'utilisé lors de l'étape (i).

En ce qui concerne plus particulièrement le procédé de préparation de l'invention, la réaction du silicate avec l'agent acidifiant se fait d'une manière spécifique comme indiqué ci-dessous.

On met en contact (étape (i)) :

- une suspension aqueuse de silice précipitée (qui peut être une bouillie réactionnelle de silice précipitée), ladite suspension présentant un pH compris entre 2,5 et 5,3, de préférence entre 2,8 et 4,9, par exemple entre 2,9 et 4,5 (voire entre 3,5 et 4,4),
- avec de l'agent acidifiant et du silicate,

de telle manière (en particulier à des débits tels) que le pH du milieu réactionnel soit maintenu entre 2,5 et 5,3, de préférence entre 2,8 et 4,9, par exemple entre 2,9 et 4,5 (voire entre 3,5 et 4,4).

Ledit pH du milieu réactionnel peut varier à l'intérieur de la plage 2,5-5,3, de préférence de la plage 2,8-4,9, par exemple 2,9-4,5 (voire 3,5-4,4), ou de manière préférée rester (sensiblement) constant à l'interieur de ces plages.

En général, dans cette étape (i), la mise en contact de la suspension aqueuse avec l'agent acidifiant et le silicate est effectuée en ajoutant de l'agent acidifiant et du silicate à la suspension aqueuse de silice précipitée.

Selon une variante du procédé de l'invention, dans l'étape (i), on ajoute à la suspension aqueuse de silice précipitée d'abord l'agent acidifiant, puis le silicate.

Cependant, selon une variante préférée du procédé de l'invention, dans l'étape (i), on ajoute plutôt simultanément l'agent acidifiant et le silicate à la suspension aqueuse de silice précipitée ; de préférence, cette addition simultanée est effectuée avec régulation du pH du milieu réactionnel à une valeur (sensiblement) constante à l'intérieur des plages précitées.

La deuxième étape (ii) du procédé selon l'invention consiste en une addition, dans le milieu réactionnel obtenu à l'issue de l'étape (i), d'un agent alcalin, de préférence de silicate, et ce jusqu'à atteindre une valeur du pH du milieu réactionnel comprise entre 4,7 et 6,3, de préférence entre 5,0 et 5,8, par exemple entre 5,0 et 5,4.

Cette deuxième étape peut être optionnelle (c'est-à-dire ne pas être mise en oeuvre) dans le cas où dans l'étape (i) on met en contact (mélange) une suspension aqueuse de silice précipitée, présentant un pH compris entre 5,0 et 5,3, avec de l'agent acidifiant et du silicate, de telle manière que le pH du milieu réactionnel soit maintenu entre 5,0 et 5,3.

De manière préférée, le procédé selon l'invention comporte l'étape (ii).

L'étape (ii) est habituellement effectuée sous agitation.

C'est en général également le cas de l'ensemble de la réaction (étapes (i) + (ii)).

L'ensemble de la réaction est généralement réalisé entre 75 et 97°C, de préférence entre 80 et 96 °C.

Il peut être avantageux de procéder à l'issue de l'étape (ii) à un mûrissement du milieu réactionnel obtenu, notamment au pH obtenu à l'issue de cette étape (ii), et en général sous agitation. Ce mûrissement peut par exemple durer de 2 à 30 minutes, en particulier de 3 à 20 minutes et peut être réalisé entre 75 et 97 °C, de préférence entre 80 et 96 °C, en particulier à la température à laquelle a été effectuée l'étape (ii). Il ne comporte préférentiellement ni addition d'agent acidifiant, ni addition de silicate.

Selon le mode préféré de réalisation du procédé de l'invention, la réaction du silicate avec l'agent acidifiant est réalisée selon les étapes successives suivantes :

(1) on forme un pied de cuve initial comportant du silicate et un électrolyte, la concentration en silicate (exprimée en $SiO_2$) dans ledit pied de cuve initial étant inférieure à 100 g/L, en particulier inférieure à 80 g/L, et, de manière préférée, la concentration en électrolyte dans ledit pied de cuve initial étant inférieure à 17 g/L, en particulier inférieure à 15 g/L, par exemple inférieure à 14 g/L,

(2) on ajoute de l'agent acidifiant audit pied de cuve jusqu'à l'obtention d'une valeur du pH du milieu réactionnel d'au moins environ 7, de préférence comprise entre 7,5 et 8,5, par exemple égale à environ 8,

(3) on ajoute au milieu réactionnel, simultanément, de l'agent acidifiant et du silicate, en particulier de telle manière (en particulier à des débits tels) que le pH du milieu réactionnel soit maintenu à au moins environ 7, de préférence entre 7,5 et 8,5, par exemple à environ 8,

(4) on arrête l'addition du silicate tout en continuant l'addition de l'agent acidifiant dans le milieu réactionnel, jusqu'à l'obtention d'une valeur du pH du milieu réactionnel comprise entre 2,5 et 5,3, de préférence entre 2,8 et 4,9, par exemple entre 2,9 et 4,5 (voire entre 3,5 et 4,4),

(i) on met en contact (mélange) la suspension aqueuse (milieu réactionnel) obtenue à l'issue de l'étape (4) avec de l'agent acidifiant et du silicate, de telle manière que le pH du milieu réactionnel soit maintenu entre 2,5 et 5,3, de préférence entre 2,8 et 4,9, par exemple entre 2,9 et 4,5 (voire entre 3,5 et 4,4),

(ii) on ajoute dans le milieu réactionnel obtenu un agent alcalin, de préférence du silicate, et ce jusqu'à atteindre une valeur du pH du milieu réactionnel comprise entre 4,7 et 6,3, de préférence entre 5,0 et 5,8, par exemple entre 5,0 et 5,4, cette étape (ii) pouvant être optionnelle dans le cas où dans l'étape (i) on met en contact (mélange) une suspension aqueuse de silice précipitée, présentant un pH compris entre 5,0 et 5,3, avec de l'agent acidifiant et du silicate, de telle manière que le pH du milieu réactionnel soit maintenu entre 5,0 et 5,3

De préférence, le mode préféré de réalisation du procédé de l'invention comporte l'étape (ii).

Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

Dans l'étape (1), la concentration en électrolyte du pied de cuve initial est supérieure à 0 g/L, par exemple supérieure à 8 g/L.

L'addition simultanée de l'étape (3) est généralement réalisée de manière telle que la valeur du pH du milieu réactionnel soit constamment égale (à $\pm$ 0,2 près) à celle atteinte à l'issue de l'étape (2).

Il peut être procédé à l'issue de l'étape (4) à un mûrissement du milieu réactionnel (suspension aqueuse) obtenu, au pH obtenu à l'issue de cette étape (4), et en général sous agitation, par exemple pendant 2 à 45 minutes, en particulier pendant 3 à 30 minutes.

Les étapes (1) à (4), comme en général l'ensemble de la réaction, sont le plus souvent effectuées sous agitation.

De même, toutes les étapes sont habituellement réalisées entre 75 et 97 °C, de préférence entre 80 et 96 °C.

Selon une variante du mode de réalisation préféré du procédé de l'invention, l'ensemble des étapes est effectué à une température constante.

Selon une autre variante du mode de réalisation préféré du procédé de l'invention, la température de fin de réaction est plus élevée que la température de début de réaction : ainsi, on maintient la température au début de la réaction (par exemple au cours des étapes (1) et (2)) de préférence entre 75 et 90 °C, puis on augmente la température, de préférence jusqu'à une valeur comprise entre 90 et 97 °C, valeur à laquelle elle est maintenue (par exemple au cours des étapes (3), (4), (i) et (ii)) jusqu'à la fin de la réaction.

Dans le procédé selon l'invention, et en particulier dans le mode de réalisation préféré du procédé selon l'invention, l'étape (i) peut être effectuée dans un mélangeur rapide ou dans une zone d'écoulement turbulent, ce qui peut permettre un meilleur contrôle des caractéristiques des silices précipitées obtenues.

Par exemple, dans le cas où, dans l'étape (i), on ajoute à la suspension aqueuse de silice précipitée d'abord l'agent acidifiant, puis le silicate, alors la mise en contact dudit silicate avec le milieu résultant de l'ajout de l'agent acidifiant à la suspension aqueuse de silice précipitée peut être effectuée dans un mélangeur rapide ou dans une zone d'écoulement turbulent.

De même, dans le cas où, dans l'étape (i), on ajoute simultanément l'agent acidifiant et le silicate à la suspension aqueuse de silice précipitée, alors la mise en contact dudit agent acidifiant et dudit silicate avec la suspension aqueuse de silice précipitée peut être effectuée dans un mélangeur rapide ou dans une zone d'écoulement turbulent.

De préférence, le milieu réactionnel obtenu dans le mélangeur rapide ou dans une zone d'écoulement turbulent alimente un réacteur, de préférence soumis à une agitation, réacteur dans lequel l'étape (ii) est ensuite mise en oeuvre.

Dans l'étape (i), on peut utiliser un mélangeur rapide choisi parmi les mélangeurs (ou tubes) en T ou en Y symétriques, les mélangeurs (ou tubes) en T ou en Y asymétriques, les mélangeurs à jets tangentiels, les mélangeurs Hartridge-Roughton, les mélangeurs vortex, les mélangeurs rotor-stators.

Les mélangeurs (ou tubes) en T ou en Y symétriques sont généralement constitués de deux tubes opposés (tubes en T) ou formant un angle inférieur à 180° (tubes en Y), de même diamètre, déchargeant dans un tube central dont le diamètre est identique ou supérieur à celui des deux tubes précédents. Ils sont dits « symétriques » car les deux tubes d'injection des réactifs présentent le même diamètre et le même angle par rapport au tube central, le dispositif étant caractérisé par un axe de symétrie. De préférence, le tube central présente un diamètre deux fois plus élevés environ que le diamètre des tubes opposés ; de même la vitesse de fluide dans le tube central est de préférence égale à la moitié de celle dans les tubes opposés.

On préfère cependant employer, en particulier lorsque les deux fluides à introduire ne présentent pas le même débit, un mélangeur (ou tube) en T ou en Y asymétriques plutôt qu'un mélangeur (ou tube) en T ou en Y symétrique. Dans les dispositifs asymétriques, un des fluides (le fluide de plus faible débit en général) est injecté dans le tube central au moyen d'un tube latéral de diamètre plus faible. Ce dernier forme avec le tube central un angle de 90° en général (tube en T) ; cet angle peut être différent de 90° (tube en Y), donnant des systèmes à co-courant (par exemple angle de 45°) ou à contre-courant (par exemple angle de 135°) par rapport à l'autre courant.

A titre de mélangeur rapide, on utilise de préférence un mélangeur à jets tangentiels, un mélangeur Hartridge-Roughton ou un mélangeur (ou précipiteur) vortex, qui dérivent des dispositifs en T symétriques.

Plus particulièrement, dans l'étape (i), on peut mettre en oeuvre un mélangeur rapide à jets tangentiels, Hartridge-Roughton ou vortex, comprenant une chambre ayant (a) au moins deux admissions tangentielles par lesquelles entrent séparément (mais en même temps) soit, d'une part, le silicate, et, d'autre part, le milieu résultant de l'ajout d'agent acidifiant à la suspension aqueuse de silice précipitée, soit, d'une part, le silicate et l'agent acidifiant, et, d'autre part, la suspension aqueuse de silice précipitée, et (b) une sortie axiale par laquelle sort le milieu réactionnel et ce, de préférence, vers un(e) réacteur (cuve) disposé(e) en série après ledit mélangeur. Les deux admissions tangentielles sont de préférence situées symétriquement, et de manière opposée, par rapport à l'axe central de ladite chambre.

La chambre du mélangeur à jets tangentiels, Hartridge-Roughton ou vortex éventuellement utilisé présente généralement une section circulaire et est de préférence de forme cylindrique.

Chaque tube d'admission tangentielle peut présenter un diamètre interne d de 0,5 à 80 mm.

Ce diamètre interne d peut être compris entre 0,5 et 10 mm, en particulier entre 1 et 9 mm, par exemple entre 2 et 7 mm. Cependant, notamment à l'échelle industrielle, il est de préférence compris entre 10 et 80 mm, en particulier entre 20 et 60 mm, par exemple entre 30 et 50 mm.

Le diamètre interne de la chambre du mélangeur à jets tangentiels, Hartridge-Roughton ou vortex éventuellement employé peut être compris entre 3d et 6d, en particulier entre 3d et 5d, par exemple égal à 4d ; le diamètre interne du tube de sortie axiale peut être compris entre 1d et 3d, en particulier entre 1,5d et 2,5d, par exemple égal à 2d.

Les débits du silicate et de l'agent acidifiant sont par exemple déterminés de façon à ce qu'au point de confluence les deux courants de réactifs entrent en contact l'un avec l'autre dans une zone d'écoulement suffisamment turbulent.

Dans le procédé selon l'invention, et en particulier dans le mode de réalisation préféré du procédé selon l'invention, on obtient, à l'issue de l'étape (ii), éventuellement suivie d'un mûrissement, une bouillie de silice qui est ensuite séparée (séparation liquide-solide).

La séparation mise en oeuvre dans le procédé de préparation selon l'invention, et notamment dans son mode de réalisation préféré, comprend habituellement une filtration, suivie d'un lavage si nécessaire. La filtration s'effectue selon toute méthode convenable, par exemple au moyen d'un filtre presse, d'un filtre à bande, d'un filtre sous vide.

La suspension de silice ainsi récupérée (gâteau de filtration) est ensuite séchée.

Ce séchage peut se faire selon tout moyen connu en soi.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée mécaniquement, par passage du gâteau dans un broyeur de type colloïdal ou à bille. Le délitage est généralement effectué en présence d'un composé de l'aluminium, en particulier d'aluminate de sodium et, éventuellement, en présence d'un agent acidifiant tel que décrit précédemment (dans ce dernier cas, le composé de l'aluminium et l'agent acidifiant sont généralement ajoutés de manière simultanée). L'opération de délitage permet notamment d'abaisser la viscosité de la suspension à sécher ultérieurement.

Lorsque le séchage est effectué à l'aide d'un atomiseur à buses, la silice susceptible d'être alors obtenue se présente habituellement sous forme de billes sensiblement sphériques.

A l'issue du séchage, on peut alors procéder à une étape de broyage sur le produit récupéré. La silice qui est alors susceptible d'être obtenue se présente généralement sous forme d'une poudre.

Lorsque le séchage est effectué à l'aide d'un atomiseur à turbines, la silice susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice ...), une extrusion ou, de préférence, un compactage à sec. Lorsque l'on met en oeuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice susceptible d'être alors obtenue par cette étape d'agglomération se présente généralement sous la forme de granulés.

Les poudres, de même que les billes, de silice obtenues par le procédé selon l'invention offrent ainsi l'avantage, entre autre, d'accéder de manière simple, efficace et économique, à des granulés, notamment par des opérations classiques de mise en forme, telles que par exemple une granulation ou un compactage, sans que ces dernières n'entraînent de dégradations susceptibles de masquer, voire annihiler, les bonnes propriétés intrinsèques attachées à ces poudres ou ces billes, comme cela peut être le cas dans l'art antérieur en mettant en oeuvre des poudres classiques.

Le procédé de préparation selon l'invention, en particulier selon son mode préféré, permet notamment d'obtenir des silices précipitées présentant généralement une bonne aptitude à la dispersion (dispersibilité) dans les polymères et conférant à ceux-ci un compromis de propriétés très satisfaisant. Les silices précipitées obtenues présentent de préférence une morphologie, une granulométrie et une porosité particulières.

Dans l'exposé qui suit, la surface spécifique CTAB est la surface externe, qui peut être déterminée selon la méthode décrite ci-dessous dérivée de la norme NF ISO 5794-1 (février 2006, 2ème tirage 2006-03).

### *Principe*

La silice est mise en contact avec une solution de bromure de cétyltriméthyl ammonium (ou hexadécyltriméthylammonium), appelé communément CTAB, sous agitation magnétique. La couche de CTAB adsorbé est proportionnelle à la surface spécifique de la silice.

La silice et la solution de CTAB résiduel sont séparées. Le titrage de l'excès de CTAB est effectué par une solution de di(2-éthylhexyl)sulfosuccinate de sodium, appelé communément OT, jusqu'à un point de turbidité maximale.

La surface externe d'une silice peut se déterminer par la quantité de CTAB qu'elle est capable d'adsorber, exprimée en $m^2/g$, sur produit séché pendant 2 heures à 105 °C.

### *Matériel et équipement*

#### *- Matériel*

Filtres pour seringues 0,45 $\mu$m
Flacons
Fiole jaugée de 5000 mL.
Barreaux aimantés
Seringues de 10 mL

#### *- Equipement*

Balance avec une précision à 0,1 mg près
Agitateurs magnétiques
Titrateur automatique équipé i) d'un détecteur photoélectrique ou d'un photomètre mesurant le facteur de transmission de la lumière à la longueur d'onde de 550 nm, et ii) d'une burette, par exemple un titrateur Mettler DL 21 avec phototrode 550 nm

### *Mode opératoire*

Durant toute la durée d'analyse, tous les appareils et toutes les solutions doivent être à une température comprise entre 23 et 27 °C, afin d'éviter un début de cristallisation, le CTAB cristallisant à 20 °C.

*- Réactifs*

• Solution de CTAB de concentration (Co) de 11 g/L, tamponnée à pH 9,6 :

Dans une fiole jaugée de 5 litres, contenant environ 1 litre d'eau permutée, on pèse/introduit :

- 5,426 g d'acide borique,
- 6,489 g de chlorure de potassium et
- 64,5 cm$^3$ de soude 1 mol/L à la burette.

Puis on homogénéise le mélange.
On rajoute 55 g $\pm$ 0,001 g de CTAB et environ 3 litres d'eau permutée.
On homogénéise jusqu'à complète dissolution du CTAB et on ajuste à 5 litres avec de l'eau permutée.

• Solution d'aérosol OT (di(2-éthylhexyl)sulfosuccinate de sodium) :

On pèse environ 1,85 g $\pm$ 0,01 g d'aérosol et on les dissout dans une fiole jaugée d'un litre avec de l'eau permutée (on chauffe légèrement pour accélérer la dissolution sous agitation magnétique).
La solution obtenue est laissée au repos pendant 12 jours avant utilisation.

*- Méthode d'analyse*

. Préparation de la suspension

On pèse dans un flacon TP 50/100 environ exactement :

1,60 g $\pm$ 0,05 g de silice pour une surface spécifique attendue inférieure à 130 m$^2$/g,
0,90 g $\pm$ 0,05 g de silice pour une surface spécifique attendue comprise entre 130 et 180 m$^2$/g,
0,66 g $\pm$ 0,05 g de silice pour une surface spécifique attendue supérieure à 180 m$^2$/g.

On ajoute ensuite à cette masse M de silice 90 mL (Vo) de solution de CTAB.

. Adsorption

On introduit un barreau aimanté, de longueur égale à 35 mm (par exemple barreau aimanté dit "double extrémité"), dans le flacon qui est alors mis en agitation à l'aide d'agitateurs magnétiques (temps de séjour de 40 minutes, vitesse d'agitation de 600 trs/min).

. Filtration

A l'aide d'une seringue, on prélève de la suspension. Puis, après avoir équipé la seringue d'un filtre 0,45 $\mu$m, on filtre la suspension et on récupère environ 10 mL de solution filtrée dans un flacon.

. Mesures

On prépare le titrateur automatique conformémemnt aux instructions du fabricant. On choisit les paramètres de titrage de manière à obtenir une introduction rapide de solution d'aérosol OT au début du titrage et vun ralentissement en fonction de la pente de la courbe de titrage au voisinage du point final.

*- Titrage à blanc*

Un premier titrage ou titrage à blanc (titrage 1) est préalablement effectué quotidiennement, avant le titrage de l'échantillon, sur la solution de CTAB de départ, c'est-à-dire avant mélange avec la silice.
On pèse environ exactement 5 g de solution de CTAB de départ, puis on les introduit dans un flacon.
On y ajoute 54 mL d'eau permutée.
On procède au titrage (titrage 1).
Pour cela, on place le flacon dans le titrateur automatique et on règle la vitesse de l'agitateur de manière à pouvoir effectuer le mélange sans produire de mousse.

Puis on commence le titrage qui prend fin automatiquement une fois que le point de turbidité maximale est atteint.

Chaque titrage est effectué en double.

V1 est le volume (en mL) de solution d'aérosol OT obtenu pour le titrage de la masse M1 (en g) de la solution de CTAB de départ utilisée pour ce titrage.

- Titrage de l'échantillon

On pèse environ exactement 5 g de solution récupérée après la filtration, puis on les introduit dans un flacon.

On y ajoute 54 mL d'eau permutée.

On procède au titrage (titrage 2).

Pour cela, on place le flacon dans le titrateur automatique et on règle la vitesse de l'agitateur de manière à pouvoir effectuer le mélange sans produire de mousse.

Puis on commence le titrage qui prend fin automatiquement une fois que le point de turbidité maximale est atteint.

Chaque titrage est effectué en double.

V2 est le volume (en mL) de solution d'aérosol OT obtenu pour le titrage de la masse M2 (en g) de la solution de CTAB récupérée après la filtration et utilisée pour ce titrage.

- Calcul

La surface CTAB (en $m^2$/g) est égale à :

$$578,4 \times (Vo/M) \times (100/(100 - Hum)) \times (Co/1000) \times [((V1/M1) - (V2/M2))/(V1/M1)]$$

avec :

Vo : volume (en mL) de solution de CTAB de départ (90 mL) ajoutée à la silice pour préparer la suspension en vue du titrage,

M : masse (en g) de silice à laquelle est ajoutée la solution de CTAB de départ pour préparer la suspension en vue du titrage,

Hum : humidité (ou teneur en eau résiduelle) de la silice mesurée après traitement thermique à 105 °C pendant 2 heures (en nombre de %)

Co : concentration initiale (en g/L) de la solution de CTAB (11 g/L)

M1 : masse (en g) de la solution de CTAB de départ utilisée pour le titrage 1, c'est-à-dire avant mélange avec la silice

V1 : volume (en mL) de solution d'aérosol OT obtenu pour le titrage de M1 (titrage 1)

M2 : masse (en g) de la solution de CTAB utilisée pour le titrage 2, c'est-à-dire après mélange avec la silice et adsorption sur la silice

V2 : volume (en mL) de solution d'aérosol OT obtenu pour le titrage de M2 (titrage 2)

578,4 correspond à la surface (en $m^2$) occupée par 1 gramme de CTAB.

La surface spécifique BET est déterminée selon une méthode découlant de la méthode de BRUNAUER - EMMET - TELLER décrite dans "The journal of the American Chemical Society", Vol. 60, page 309, février 1938 et correspondant à la norme NF ISO 9277 (décembre 1996).

Le pH est mesuré selon la méthode suivante dérivant de la norme ISO 787/9 (pH d'une suspension à 5 % dans l'eau) :

*Appareillage* :

- pHmètre étalonné (précision de lecture au 1/100[e])
- életrode de verre combinée
- bécher de 200 mL
- éprouvette de 100 mL
- balance de précision à 0,01 g près.

*Mode opératoire :*

5 g de silice sont pesés à 0,01 g près dans le bécher de 200 mL. 95 mL d'eau mesurés à partir de l'éprouvette graduée sont ensuite ajoutés à la poudre de silice. La suspension ainsi obtenue est agitée énergiquement (agitation magnétique) pendant 10 minutes. La mesure du pH est alors effectué.

La méthode d'analyse granulométrique XDC par sédimentation centrifuge, à l'aide de laquelle est mesurée la taille médiane d50 d'agrégats, est décrite ci-après :

*Matériel nécessaire*

- granulomètre à sédimentation centrifuge BI-XDC (BROOKHAVEN-INSTRUMENT X DISC CENTRIFUGE) commercialisé par la société Brookhaven Instrument Corporation)
- bécher forme haute de 50 ml
- éprouvette graduée de 50 ml
- sonde à ultra-sons BRANSON 1500 watts, sans embout, de diamètre de 13 mm,
- eau permutée
- cristallisoir rempli de glace
- agitateur magnétique

*Conditions de mesure*

- version Windows 3.54 du logiciel (fournie par le fabricant du granulomètre)
- mode fixe
- vitesse de rotation : 5000 tr/min
- durée de l'analyse : 120 minutes
- densité (silice) : 2,1
- volume de la suspension à prélever : 15 ml

*Préparation de l'échantillon*

Ajouter dans le bécher forme haute 3,2 g de silice et 40 ml d'eau permutée.

Mettre le bécher contenant la suspension dans le cristallisoir rempli de glace.

Plonger la sonde à ultra-sons dans le bécher.

Désagglomérer la suspension pendant 8 minutes à l'aide de la sonde BRANSON de 1500 watts (utilisée à 60 % de la puissance maximale).

Lorsque la désagglomération est terminée, mettre le bécher sur un agitateur magnétique.

Refroidir la dispersion obtenue à la température ambiante (21 °C)

*Préparation du granulomètre*

Allumer l'appareil et laisser chauffer pendant au moins 30 minutes.

Rincer 2 fois le disque à l'eau permutée.

Introduire dans le disque 15 ml de l'échantillon à analyser et mettre en agitation.

Entrer dans le logiciel les conditions de mesure mentionnées ci-dessus.

Faire les mesures.

Lorsque les mesures ont été effectuées :

Arrêter la rotation du disque.

Rincer plusieurs fois le disque à l'eau permutée.

Arrêter l'appareil.

### *Résultats*

Dans le registre d'appareil, relever les valeurs du diamètre passant à 50 % (% massique) ou taille médiane (taille pour laquelle on a 50 % en masse des agrégats de taille inférieure à cette taille) et éventuellement la valeur du Mode (la dérivée de la courbe granulométrique cumulée donne une courbe de fréquence dont l'abscisse du maximum (abscisse de la population principale) est appelé le Mode).

Les volumes poreux et diamètres/rayons de pores donnés sont mesurés par porosimétrie au mercure (Hg), à l'aide d'un porosimètre MICROMERITICS Autopore IV 9520, et sont calculés par la relation de WASHBURN avec un angle de contact théta égal à 140° et une tension superficielle gamma égale à 485 Dynes/cm ; la préparation de chaque échantillon se fait comme suit : chaque échantillon est préalablement séché pendant 2 heures en étuve à 200 °C.

$V_{(d5 - d50)}$ représente le volume poreux constitué par les pores de diamètres compris entre d5 et d50, et $V_{(d5 - d100)}$ représente le volume poreux constitué par les pores de diamètres compris entre d5 et d100, dn étant ici le diamètre de pores pour lequel n % de la surface totale de tous les pores est apporté par les pores de diamètre supérieur à ce diamètre (la surface totale des pores (S0) peut être déterminée à partir de la courbe d'intrusion de mercure).

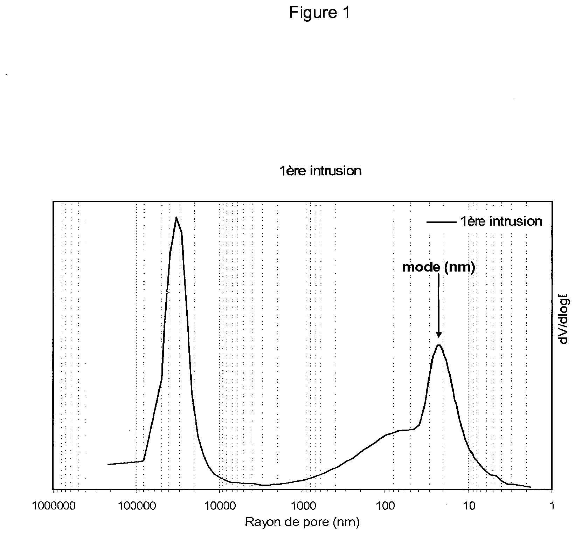

La dérivée de la courbe cumulée (volume poreux cumulé (ml/g) en fonction du rayon de pores (nm), figure 1) donne une courbe de fréquence dont l'abscisse du maximum (abscisse de la population principale) pour des pores de rayons inférieurs à 100 nm est appelée le Mode (en nm).

La morphologie de la silice, la présence de particules primaires de tailles différentes et la taille (le diamètre) desdites particules primaires sont illustrées/mesurées par Microscopie Electronique à Transmission (MET) comme suit.

**1) Principe de la méthode:**

La microscopie électronique à transmission (MET) est utilisée dans son mode imagerie, à des grandissements allant jusqu'à 400000, qui sont appropriés pour caractériser les particules primaires de silice.

L'objectif de la caractérisation par MET des silices selon l'invention est de donner accès à des répartitions granulométriques, pondérées par le nombre, des particules primaires de silice.

Les clichés obtenus par la technique MET ne permettant pas nécessairement de dissocier les différentes particules primaires par analyse d'image, c'est au microscopiste de les identifier ; le critère utilisé pour cela est la proportion de la circonférence qui est reconnaissable: Il peut se produire que dans certaines régions des agrégats, il soit impossible d'identifier des particules primaires (par exemple en cas de surépaisseurs locales de matière, ou bien si les particules sont trop interpénétrées pour que la notion de particule primaire ait un sens). Cela n'est cependant pas un obstacle à l'identification d'un nombre de particules primaires suffisamment grand pour obtenir des valeurs significatives.

Le principe de la méthode est donc d'identifier un nombre suffisamment élevé de particules primaires et d'analyser leurs dimensions.

Les particules primaires de la silice obtenue par le procédé de l'invention sont assimilables à des sphères ; l'analyse des dimensions se fait à partir du cliché MET ; elle consiste, pour chaque particule primaire identifiée, à superposer un cercle qui reproduit correctement la circonférence de la particule, et à mesurer son diamètre. Cette opération est répétée sur un nombre suffisamment élevé de particules primaires, afin d'établir une répartition granulométrique de ces particules primaires, pondérée par le nombre. Cette répartition est une répartition différentielle. On en déduit une répartition granulométrique cumulée des particules primaires. Le descripteur choisi pour exploiter ces dimensions est déduit de la répartition granulométrique cumulée. Il s'agit du diamètre médian en nombre d50%. C'est le diamètre tel que 50 % des particules primaires comptées ont un diamètre inférieur à cette valeur, et 50 % des particules primaires comptées ont un diamètre supérieur à cette valeur.

Comme décrit ci-après, la silice obtenue par le procédé de l'invention est formée de deux familles de particules primaires de silice, dont les diamètres sont différents et qui sont facilement discernables sur les clichés obtenus par la technique MET. Pour une silice donnée, les opérations d'identification et de comptage des particules primaires sont donc conduites à deux reprises, une première fois pour les petites particules primaires et une deuxième fois pour les grosses particules primaires ; ces deux opérations sont conduites séparément, et les résultats obtenus sont représentés par deux répartitions granulométriques pondérées par le nombre, qui ne sont liées en aucune façon. Compte tenu des différences importantes de diamètre entre les petites particules primaires et les grosses particules primaires, il est nécessaire de procéder à deux acquisitions de clichés séparées, à deux grandissements différents ; des valeurs de grandissement usuelles sont 150000 à 250000 pour l'analyse granulométrique des grosses particules primaires, et 400000 pour l'analyse granulométrique des petites particules primaires. Ces valeurs peuvent varier en fonction des dimensions des particules.

2) Mode opératoire:

Le matériel nécessaire est le suivant :

a) Microscope électronique à transmission donnant accès à des grandissements allant au moins jusqu'à 400000. La tension d'accélération sera choisie de préférence égale à 120 kV.

b) Grilles pour observation MET. Une possibilité est de préparer des grilles 200 mesh en cuivre selon le mode opératoire suivant :

préparation d'une solution de Collodion (nitrocellulose) à 0,2 % en polymère dans l'acétate d'isoamyle,
remplissage d'un cristallisoir par de l'eau permutée, et disposition des grilles MET à l'intérieur,
dépôt de quelques gouttes de la solution de collodion à la surface de l'eau,
évaporation du solvant de façon à élaborer un film de collodion à la surface de l'eau,
soutirage de façon à déposer le film de collodion à la surface des grilles,
dépôt sous vide d'un grain de carbone de taille comprise entre 2 et 3 nm au moyen d'un métalliseur carbone,
hydrophilisation de la surface de collodion carbonée, par un plasma d'air généré sous haute tension et sous vide contrôlé, au moyen d'un hydrophilisateur.

Après cette opération, la surface ne reste hydrophile que pendant 30 minutes environ ; il est donc préférable de ne réaliser cette opération qu'au dernier moment, une fois la suspension de silice prête.

Au préalable, le microscope électronique à transmission doit être correctement aligné suivant la procédure fournie par son constructeur. En outre il doit faire l'objet d'une vérification de bon fonctionnement portant sur son grandissement. On utilise à cet effet un étalon ou un matériau de référence certifié, tel que les grandissements 150000 et 400000 soient inclus dans l'intervalle des valeurs de grandissement retenu pour la vérification. L'écart constaté entre les valeurs de distances mesurées et les valeurs de distances fournies sur le certificat de l'étalon ou du matériau de référence doit être au maximum égal à 10 %.

Le mode opératoire se décompose comme suit :

i) Préparation d'une suspension de silice désagglomérée aux ultra-sons selon le protocole donné pour la préparation de l'échantillon dans la méthode d'analyse granulométrique XDC par sédimentation centrifuge décrite plus haut.

ii) Dilution d'un facteur 50 de cette suspension dans l'eau permutée.

iii) Dépôt de quelques microlitres de cette suspension sur une grille MET hydrophilisée (moins de 5 $\mu$L).

iv) Une fois la grille sèche, la placer sur le porte-objet.

v) Introduire le porte-objet dans le microscope et procéder aux réglages usuels (en particulier eucentricité et astigmatisme objectif).

vi) La silice étant très sensible au rayonnement électronique, l'acquisition des clichés doit se faire sur des champs n'ayant jamais été exposés aux électrons, et dans des conditions telles que l'exposition du champ observé aux électrons soit la plus courte possible, temps de pose inclus (< 5 secondes). Si nécessaire on utilise un mode d'exposition "Low-Dose" ou un équivalent. On doit attacher une grande importance à l'observation de détail du champ observé, afin d'être certain que les dégâts d'irradiation soient négligeables. Si malgré toutes ces précautions, des dégâts irréversibles apparaissent sur l'échantillon, il sera nécessaire d'envisager l'observation à froid au moyen d'un porte-objet refroidi à la température de l'azote liquide.

vii) On réalise au moins une dizaine de clichés au grandissement 150000 et une dizaine de clichés au grandissement 400000, l'objectif étant d'être assuré de compter au moins 200 petites particules primaires et 200 grosses particules primaires. L'aire de grille utilisée effectivement pour l'identification et le comptage des particules doit être au minimum de 0,5 $\mu$m$^2$ pour les petites particules primaires et de 3,0 $\mu$m$^2$ pour les grosses particules primaires.

viii) On considère par la suite que les petites particules primaires sont les particules inscrites dans un cercle de diamètre inférieur strictement à 10 nm, et que les grosses particules primaires sont les particules inscrites dans un cercle de diamètre supérieur ou égal à 10 nm.

ix) Comme énoncé ci-dessus, on procède séparément à la détermination de la répartition granulométrique des petites particules primaires, et à la détermination de la répartition granulométrique des grosses particules primaires, ces deux répartitions étant pondérées par le nombre. Les objets identifiés comme étant des particules primaires sont assimilés à des sphères, et le cercle qui est considéré pour caractériser chaque particule est le cercle dans lequel la particule en question est inscrite. Cette opération peut se faire à l'aide d'un logiciel tel que par exemple ImageJ, Adobe Photoshop ou Analysis.

20 classes granulométriques sont définies entre 0 et 10 nm pour les petites particules primaires, de façon linéaire (c'est-à-dire classes de largeur 0,5 nm) ; 20 classes granulométriques sont définies au dessus de 10 nm pour les grosses particules primaires, de façon linéaire, et de manière à représenter toutes les grosses particules primaires identifiées.

L'identification des particules primaires est basée sur la portion de leur périphérie qui est reconnaissable. Dans le cas des grosses particules primaires, on considère que le tiers environ de la circonférence doit au minimum être reconnaissable pour valider l'identification. C'est le cas pour les particules situées en périphérie de l'agrégat, ou bien pour les particules présentant une différence de contraste suffisante avec le reste de l'agrégat.

Dans le cas des petites particules primaires, on considère que la moitié environ de la circonférence doit au minimum être reconnaissable pour valider l'identification. Cela s'observe en périphérie des agrégats, sur les petites particules visibles à la surface des grosses particules primaires, ou bien dans des zones de l'agrégat de faible épaisseur, pour des petites particules présentant une différence de contraste suffisante avec le reste de l'agrégat.

x) Pour chaque type de particule primaire, grosse ou petite, la répartition granulométrique différentielle en nombre est déterminée, et à partir de cette répartition différentielle, la répartition granulométrique cumulée est déterminée. Cette dernière opération peut se faire à l'aide d'un logiciel tel que par exemple Microsoft Excel. A partir de chaque répartition granulométrique cumulée, on détermine le diamètre médian en nombre D50%, exprimé en nanomètres.

xi) Une fois ces deux répartitions granulométriques déterminées, il est nécessaire de vérifier que cette démarche de caractérisation par MET est bien adaptée à la silice étudiée, en considérant pour chacune des deux familles de particules l'enveloppe de la répartition granulométrique différentielle. Cette enveloppe doit présenter un maximum dans la région 0 à 10 nm pour la famille des petites particules primaires, et elle doit présenter un maximum au-dessus de 10 nm pour la famille des grosses particules primaires. Ceci valide l'existence de deux familles de particules distinctes par leurs dimensions.

La morphologie de la silice et la présence de particules primaires de tailles différentes peuvent être également illustrées par diffusion de rayons X aux petits angles (en anglais SAXS (*Small Angle X ray Scattering*)) comme suit.

1) *Principe de la méthode :*

La diffusion de rayons X aux petits angles (SAXS) consiste à exploiter la déviation d'un faisceau de rayons X incident, de longueur d'onde λ, traversant l'échantillon, dans un cône de quelques degrés d'angle. A un angle de diffusion θ correspond un vecteur d'onde défini par la relation suivante : $q = \dfrac{4\pi}{\lambda} \sin \dfrac{\theta}{2}$ dont l'unité est l'Å⁻¹.

A chaque angle de diffusion correspond un vecteur d'onde q défini dans l'espace réciproque. Ce vecteur d'onde correspond à une échelle spatiale définie dans l'espace réel, et qui équivaut à $2\pi/q$. La diffusion aux petits angles caractérise donc les grandes distances dans l'échantillon, et inversement la diffusion aux grands angles caractérise les petites distances dans l'échantillon. La technique est sensible à la façon dont la matière est distribuée dans l'espace.

Des références de base sur cette technique sont données ci-dessous :

[1] Small Angle Scattering of X rays, Guinier A., Fournet G., (1955), Wiley, New York.
[2] Small Angle X Ray Scattering , Glatter O., Krattky O., (1982), Academic Press, New York.
[3] Analysis of the Small-Angle Intensity Scattered by a Porous and Granular Medium, Spalla O., Lyonnard S., Testard F., J. Appl. Cryst. (2003), 36, 338-347.

La configuration requise pour caractériser des silices par SAXS selon le critère défini ci-après est la suivante :

- montage SAXS travaillant dans une géométrie de transmission (c'est-à-dire le faisceau incident traversant l'échantillon), avec une longueur d'onde incidente comprise entre 0,5 et 2 Angströms (Å),
- intervalle de vecteur d'onde q compris entre 0,015 Å⁻¹ et 0,30 Å⁻¹, ce qui permet de caractériser des distances dans l'espace réel allant de 420 à 20 A,
- montage vérifié en échelle de q à l'aide d'un étalon convenable (par exemple béhénate d'argent, octadécanol ou tout autre composé donnant une raie SAXS fine comprise dans l'intervalle de q ci-dessus),
- détecteur linéaire unidimensionnel ou de préférence bidimensionnel,
- le montage doit permettre de mesurer la transmission de la préparation, c'est-à-dire le rapport entre l'intensité transmise par l'échantillon et l'intensité incidente.

Un tel montage peut être par exemple un montage de laboratoire, fonctionnant sur une source de type tube à rayons X ou bien anode tournante, utilisant de préférence l'émission k$_\alpha$ du cuivre à 1,54 A. Le détecteur peut être une plaque image ou de préférence un détecteur à gaz. Il peut aussi s'agir d'un montage SAXS sur synchrotron.

2) *Mode opératoire :*

L'échantillon de silice est analysé sous forme solide pulvérulente. La poudre est placée entre deux fenêtres transparentes aux rayons X. Indépendamment de cette préparation, on réalise une cellule vide avec uniquement deux fenêtres transparentes, sans silice à l'intérieur. La diffusion par la cellule vide doit être enregistrée séparément de la diffusion par la silice. Lors de cette opération, dite "mesure du background", l'intensité diffusée provient de toutes les contributions extérieures à la silice, telles que le bruit de fond électronique, la diffusion par les fenêtres transparentes, la divergence résiduelle du faisceau incident.

Ces fenêtres transparentes doivent apporter un bruit de fond faible devant l'intensité diffusée par la silice sur l'intervalle de vecteur d'onde exploré. Elles peuvent être constituées de mica, de film de Kapton, ou préférentiellement de film de Kapton adhésif.

Préalablement à l'acquisition SAXS proprement dite sur la silice, il convient de vérifier la qualité de la préparation au moyen de la mesure de transmission de la cellule chargée de silice.

Les étapes à franchir sont donc les suivantes:

2.1) Elaboration d'une cellule constituée de deux fenêtres sans silice (cellule vide).

2.2) Elaboration d'une cellule constituée de deux fenêtres, avec un échantillon de poudre de silice à l'intérieur. La quantité de silice introduite doit être inférieure à 50 mg. La silice doit former une couche d'épaisseur inférieure à 100 μm. On chercher de préférence à obtenir une monocouche de grains de silice disposée sur une fenêtre, ce qui est plus facile à obtenir avec des fenêtres adhésives. La qualité de la préparation est contrôlée par la mesure de la transmission (étape 2.3)).

2.3) Mesure de la transmission de la cellule vide et de la cellule de silice. On définit le rapport R de la façon suivante :

$$R = \text{transmission de la cellule de silice / transmission de la cellule vide}$$

R doit être compris entre 0,6 et 0,9, afin de minimiser les risques de diffusion multiple, tout en conservant un rapport signal sur bruit satisfaisant à grand q. Si la valeur de R est trop faible, il convient de diminuer la quantité de silice visible par le faisceau ; si elle est trop élevé, il faut rajouter de la silice.

2.4) Acquisition SAXS sur la cellule vide et sur la cellule de silice.
Les temps d'acquisition doivent être déterminés de telle façon que le rapport signal/bruit à grand q soit acceptable. Ils doivent être tels qu'au voisinage immédiat de q = 0,12Å$^{-1}$, les fluctuations de la fonction F(q) définie ci-après ne doivent pas dépasser +/- 5 % par rapport à la valeur que prend la fonction F en ce point.

2.5) Si l'on a utilisé un détecteur bidimensionnel : regroupement radial de chacun des deux spectres bidimensionnels pour obtenir l'intensité diffusée en fonction du vecteur d'onde q.
La détermination de l'intensité diffusée doit tenir compte du temps d'exposition, de l'intensité du faisceau incident, de la transmission de l'échantillon, de l'angle solide intercepté par le pixel du détecteur. La détermination du vecteur d'onde doit tenir compte de la longueur d'onde du faisceau incident et de la distance échantillon-détecteur.

2.6) Si l'on a utilisé un détecteur monodimensionnel : les déterminations précédentes concernant l'intensité diffusée et le vecteur d'onde sont à effectuer, mais il n'y a pas de regroupement radial à prévoir.

2.7) On arrive ainsi à deux spectres réduisant l'information à la variation de l'intensité diffusée en fonction du vecteur d'onde q : un spectre pour la cellule vide et un spectre pour la cellule de silice.

2.8) Soustraction de l'intensité diffusée par la cellule vide de l'intensité diffusée par la cellule de silice (soustraction de "background").

2.9) Le spectre SAXS de la silice, après soustraction de "background", présente une décroissance monotone qui se fait selon un régime voisin du régime de Porod, c'est-à-dire que l'intensité décroît très rapidement avec le vecteur d'onde selon une loi proche d'une loi de puissance en $q^{-4}$. Les petites déviations par rapport à cette loi de Porod sont mieux visibles en représentant les données selon la méthode dite de Krattky-Porod. Il s'agit de représenter $F(q)$ en fonction de q, avec :

$$F(q) = I \times q4$$

où I représente l'intensité diffusée après soustraction du "background" et q représente le vecteur d'onde.

2.10) Dans la représentation de Krattky-Porod, lorsque l'on décrit le spectre dans le sens des vecteurs d'onde croissants, la présence de deux populations de tailles de particules se traduit par une première croissance de la fonction $F(q)$, qui caractérise les plus grosses particules, puis d'une deuxième croissance de la fonction $F(q)$, qui caractérise les plus petites particules. On peut éventuellement observer une oscillation de l'intensité au niveau de la première croissance, qui peut s'observer si la répartition de taille des plus grosses particules est relativement resserrée.

2.11) Le critère SAXS défini dans le cadre du présent exposé s'appuie sur la croissance de la fonction F entre deux bornes de vecteur d'onde définies, qui sont $q1 = 0,03$ Å$^{-1}$ et $q2 = 0,12$ Å$^{-1}$. On définit un rapport (paramètre) C de la façon suivante :

$$C = [F(q2) - F(q1)] / F(q2)$$

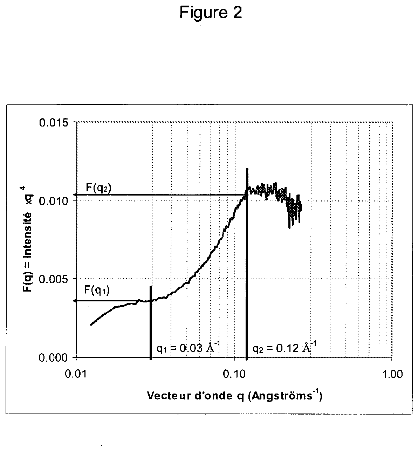

2.12) Un exemple de résultat expérimental sur une silice obtenue par le procédé de l'invention est donné à la figure 2.

Sur cette figure est reportée l'évolution de $F(q) = I \times q^4$ avec I = intensité diffusée après soustraction du "background".

Pour cette silice, on obtient $F(q1) = 3,6.10^{-3}$ et $F(q2) = 1,07.10^{-2}$.

On en déduit $C = (1,07.10^{-2} - 3,6.10^{-3}) / 1,07.10^{-2} = 0,66$.

L'aptitude à la dispersion (et à la désagglomération) des silices selon l'invention peut être quantifiée au moyen de tests spécifiques de désagglomération.

L'un des tests de désagglomération est décrit ci-dessous :

**1) Principe** :

La cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns).

**2) Matériel** :

- MALVERN MASTERSIZER 2000, équipé du module standard hydroG.
- Balance de précision donnant 0,1 mg (par exemple METTLER AE260).
- Eau permutée.
- Sonificateur BIOBLOCK (VIBRACELL 75043) de 750 watts (équipé d'un embout de 13 mm de diamètre), utilisé à 80 % de sa puissance nominale.
- Bécher de 50 mL (forme haute).

  - Eprouvette graduée de 50 mL.
  - Cristallisoir + glace.

3) Conditions de mesure :

Les conditions complètes d'analyse sont gérées manuellement en réglant:

- les paramètres de l'échantillonneur

débit de pompe : 1600 tr/min

vitesse agitateur : 600 tr/min

- les paramètres de mesure :

durée de mesure échantillon : 10 secondes

durée de mesure bruit de fond : 10 secondes

nombre de mesures : 3

- les propriétés optiques :

modèle optique : théorie de Fraunhofer

analyse standard, sensibilité normale

4) Opérations à effectuer :

i) Préparation de l'échantillon

- Dans le bécher posé sur le plateau de la balance, peser environ 2 g de l'échantillon à analyser,
- Ajouter 50 mL d'eau permutée à l'aide de l'éprouvette graduée,
- Mettre le bécher contenant la suspension de silice dans le cristallisoir contenant de la glace,
- Plonger la sonde à ultra-sons dans cette suspension en ne laissant que 1 cm entre l'extrémité de la sonde et le fond du bécher,
- Désagglomérer pendant 5 minutes et 30 secondes.

ii) Préparation du granulomètre

Dans le logiciel, procéder de la manière suivante :

- activer un fichier dans lequel seront enregistrées les mesures (lecteur A par exemple)
- ouvrir « mesurer » - « manuel »
- ouvrir « option » - nom de la particule : Fraunhofer - dispersant : eau (voir paragrahe 3 propriétés optiques)
- ouvrir « préparateur » - lancer un cycle de nettoyage
- lorsque le nettoyage est terminé, ajuster les paramètres de l'agitateur et du débit de pompe comme indiqué dans le paragraphe 3
- activer démarrer.

Lorsque les mesures de bruit de fond et alignement sont terminées, introduire une partie aliquote de la suspension de silice désagglomérée dans la cuve de façon à obtenir une obscuration correcte et poursuivre le cycle d'analyse.

Lorsque l'analyse est terminée, lancer un cycle de nettoyage.

Lorsque le nettoyage est terminé, mettre à zéro le débit de pompe et la vitesse d'agitation.

La valeur du diamètre médian $D_{50M}$ (ou diamètre médian Malvern) que l'on obtient est d'autant plus faible que la silice présente une aptitude à la désagglomération élevée.

Une vitesse de désagglomération, notée $\alpha$, peut être mesurée au moyen d'un autre test de désagglomération aux ultra-sons, à 100 % de puissance d'une sonde de 600 watts, fonctionnant en mode continu. Ce test connu, faisant notamment l'objet de la demande WO99/28376 (on peut se référer également aux demandes WO99/28380, WO00/73372, WO00/73373), permet de mesurer en continu l'évolution de la taille moyenne (en volume) des agglomérats de particules durant une sonification, selon les indications ci-après.

Le montage utilisé est constitué d'un granulomètre laser (type "MASTERSIZER S", commercialisé par Malvern Instruments - source laser He-Ne émettant dans le rouge, longueur d'onde 632,8 nm) et de son préparateur ("Malvern Small Sample Unit MSX1"), entre lesquels a été intercalée une cellule de traitement en flux continu (BIOBLOCK M72410) munie d'une sonde à ultra-sons (sonificateur 12,7 mm type VIBRACELL de 600 watts commercialisé par la société Bioblock).

Une faible quantité (150 mg) de silice à analyser est introduite dans le préparateur avec 160 mL d'eau, la vitesse de circulation étant fixée à son maximum. Au moins trois mesures consécutives sont réalisées pour déterminer selon la méthode de calcul connue de Fraunhofer (matrice de calcul Malvern 3$$D) le diamètre initial moyen (en volume) des agglomérats, noté $d_v[0]$. La sonification (mode continu) est ensuite établie à une puissance de 100 % (soit 100 % de la position maximum du "tip amplitude") et on suit durant 8 minutes environ l'évolution du diamètre moyen (en volume) $d_v[t]$ en fonction du temps "t" à raison d'une mesure toutes les 10 secondes environ. Après une période d'induction (environ 3-4 minutes), il est observé que l'inverse du diamètre moyen (en volume) $1/d_v[t]$ varie linéairement, ou de manière sensiblement linéaire, avec le temps "t" (régime stable de désagglomération). La vitesse de désagglomération $\alpha$ est calculée par régression linéaire de la courbe d'évolution de $1/d_v[t]$ en fonction du temps "t", dans la zone de régime stable de désagglomération (en général, entre 4 et 8 minutes environ) ; elle est exprimée en $\mu m^{-1}.min^{-1}$.

La demande WO99/28376 précitée décrit en détail un dispositif de mesure utilisable pour la réalisation de ce test de désagglomération aux ultrasons. Ce dispositif consiste en un circuit fermé dans lequel peut circuler un flux d'agglomérats de particules en suspension dans un liquide. Ce dispositif comporte essentiellement un préparateur d'échantillon, un granulomètre laser et une cellule de traitement. Une mise à la pression atmosphérique, au niveau du préparateur d'échantillon et de la cellule de traitement elle-même, permet l'élimination en continu des bulles d'air qui se forment durant la sonification (action de la sonde ultrasons).

Le préparateur d'échantillon ("Malvern Small Sample Unit MSX1") est destiné à recevoir l'échantillon de silice à tester (en suspension dans le liquide) et à le faire circuler à travers le circuit à la vitesse préréglée (potentiomètre - vitesse maximum d'environ 3 L/min), sous la forme d'un flux de suspension liquide. Ce préparateur consiste simplement en une cuve de réception qui contient, et à travers laquelle circule, la suspension à analyser. Il est équipé d'un moteur d'agitation, à vitesse modulable, afin d'éviter une sédimentation des agglomérats de particules de la suspension ; une mini-pompe centrifuge est destinée à assurer la circulation de la suspension dans le circuit ; l'entrée du préparateur est reliée à l'air libre via une ouverture destinée à recevoir l'échantillon de charge à tester et/ou le liquide utilisé pour la suspension.

Au préparateur est connecté un granulomètre laser ("Mastersizer S") dont la fonction est de mesurer en continu, à intervalles de temps réguliers, la taille moyenne en volume "$d_v$" des agglomérats, au passage du flux, grâce à une cellule de mesure à laquelle sont couplés les moyens d'enregistrement et de calcul automatiques du granulomètre. On rappelle ici brièvement que les granulomètres laser exploitent, de manière connue, le principe de la diffraction de la lumière par des objets solides mis en suspension dans un milieu dont l'indice de réfraction est différent de celui du solide. Selon la théorie de Fraunhofer, il existe une relation entre la taille de l'objet et l'angle de diffraction de la lumière (plus l'objet est petit et plus l'angle de diffraction sera élevé). Pratiquement, il suffit de mesurer la quantité de lumière diffractée pour différents angles de diffraction pour pouvoir déterminer la distribution de taille (en volume) de l'échantillon, $d_v$ correspondant à la taille moyenne en volume de cette distribution ($d_v = \sum(n_i d_i^4) / \sum(n_i d_i^3)$ avec $n_i$ nombre d'objets de la classe de taille ou diamètre $d_i$).

Intercalée entre le préparateur et le granulomètre laser se trouve enfin une cellule de traitement équipée d'une sonde ultrasons, pouvant fonctionner en mode continu, destinée à casser en continu les agglomérats de particules au passage du flux. Ce flux est thermostaté par l'intermédiaire d'un circuit de refroidissement disposé, au niveau de la cellule, dans une double enveloppe entourant la sonde, la température étant contrôlée par exemple par une sonde de température plongeant dans le liquide au niveau du préparateur.

Le nombre de silanols par $nm^2$ de surface est déterminé par greffage de méthanol sur la surface de la silice. Dans un premier temps, 1 gramme de silice brute est mis en suspension dans 10 mL de méthanol, dans un autoclave de 110 mL (Top Industrie, référence 09990009). Un barreau aimanté est introduit et l'autoclave, fermé hermétiquement et calorifugé, est chauffé à 200 °C (40 bars) sur agitateur magnétique chauffant pendant 4 heures. L'autoclave est ensuite refroidi dans un bain d'eau froide. La silice greffée est récupérée par décantation et le méthanol résiduel est évaporé sous courant d'azote. Enfin, la silice greffée est séchée à 130°C sous vide pendant 12 heures. La teneur en carbone est déterminée par analyseur élémentaire (analyseur NCS 2500 de CE Instruments) sur la silice brute et sur la silice greffée. Ce dosage de carbone sur la silice greffée est effectué dans les trois jours qui suivent la fin du séchage, l'humidité de l'air ou la chaleur pouvant en effet provoquer une hydrolyse du greffage méthanol. Le nombre de silanols par $nm^2$ est calculé par la formule suivante :

$$N_{SiOH/nm2} = [(\%C_g - \%C_b) \times 6{,}023 \times 10^{23}] / [S_{BET} \times 10^{18} \times 12 \times 100]$$

avec $\%C_g$ : pourcentage massique de carbone présent sur la silice greffée
$\%C_b$ : pourcentage massique de carbone présent sur la silice brute
$S_{BET}$ : surface spécifique BET de la silice ($m^2/g$)

La silice précipitée obtenue par le procédé de l'invention est caractérisée en ce qu'elle possède une morphologie particulière : elle est en effet formée d'agrégats de particules primaires (A) de silice à la surface desquels se trouvent (sont greffées) des particules primaires (B) de silice de taille inférieure à celle des particules primaires (A).

Elle est également caractérisée en ce qu'elle possède :

- une surface spécifique CTAB ($S_{CTAB}$) comprise entre 60 et 400 m$^2$/g,
- une taille médiane d50 d'agrégats (particules primaires (A) ou grosses particules primaires + particules primaires (B) ou petites particules primaires), mesurée par granulométrie XDC après désagglomération aux ultra-sons, telle que : d50 (nm) > (6214 / $S_{CTAB}$ (m$^2$/g)) + 23,
- une répartition du volume poreux telle que :

$$V_{(d5 - d50)} / V_{(d5 - d100)} > 0,906 - (0,0013 \times S_{CTAB} \text{ (m}^2\text{/g)}),$$

et

- une distribution de tailles (diamètres) de pores telle que :

$$\text{Mode (nm)} > (4166 \times S_{CTAB} \text{ (m}^2\text{/g)}) - 9,2.$$

De préférence, la silice précipitée obtenue par le procédé de l'invention présente un paramètre C, mesuré par diffusion de rayons X aux petits angles (SAXS), tel que :

$$C / S_{CTAB} \text{ (m}^2\text{/g)} > 0,001.$$

Ceci illustre une morphologie particulière, par exemple la présence de deux populations de particules primaires de tailles différentes.

La silice précipitée obtenue par le procédé de l'invention est avantageusement formée d'agrégats de grosses particules primaires de silice sur lesquels se trouvent (sont greffées) des petites particules primaires (ppp) de silice, le diamètre médian en nombre des grosses particules primaires (gpp) étant d'au moins 12 nm, en particulier d'au moins 13 nm, par exemple d'au moins 14 nm, voire d'au moins 17 nm, et le diamètre médian en nombre des petites particules primaires (ppp) étant compris entre 2 et 8 nm, en particulier entre 3 et 6 nm, par exemple entre 3 et 5 nm (diamètres déterminés par MET).

En général, la silice précipitée obtenue par le procédé de l'invention contient (détermination par MET par exemple) 30 à 95 %, de préférence 55 à 90 %, en particulier 60 à 85 %, en nombre de particules primaires (B) (ou petites particules primaires), et, 5 à 70 %, de préférence 10 à 45 %, en particulier 15 à 40 %, en nombre de particules primaires (A) (ou grosses particules primaires).

De manière préférée, dans la silice précipitée obtenue par le procédé de l'invention, il y a très peu voire pas de petites particules primaires isolées ("hors-grain"), agrégées entre elles ou non, c'est-à-dire non reliées à des agrégats de grosses particules primaires. La proportion de telles petites particules primaires isolées est en général inférieure à 10 % en nombre, en particulier inférieure à 5 % en nombre, par exemple sensiblement nulle.

De manière avantageuse, dans la silice obtenue par le procédé de l'invention, les petites particules primaires sont solidement accrochées aux agrégats de grosses particules primaires.

De manière préférée, la répartition du volume poreux de la silice précipitée obtenue par le procédé de l'invention est en outre telle que $V_{(d5 - d50)} / V_{(d5 - d100)} > 0,71$, en particulier $V_{(d5 - d50)} / V_{(d5 - d100)} > 0,72$.

La silice précipitée obtenue par le procédé de l'invention possède une surface spécifique CTAB ($S_{CTAB}$) comprise entre 60 et 400 m$^2$/g, de préférence entre 80 et 300 m$^2$/g, en particulier entre 100 et 250 m$^2$ /g. Elle peut être comprise entre 120 et 230 m$^2$/g, notamment entre 130 et 210 m$^2$/g, par exemple entre 140 et 200 m$^2$/g.

Elle présente généralement une surface spécifique BET ($S_{BET}$) comprise entre 60 et 500 m$^2$/g, de préférence entre 90 et 380 m$^2$/g, en particulier entre 120 et 300 m$^2$/g. Elle peut être comprise entre 140 et 270 m$^2$/g, notamment entré 160 et 260 m$^2$/g, par exemple entre 175 et 250 m$^2$/g.

De préférence, la silice précipitée obtenue par le procédé de l'invention présente une certaine microporosité, cependant pas trop importante ; ainsi, en général, sa surface spécifique CTAB ($S_{CTAB}$) et sa surface spécifique BET ($S_{BET}$) sont telles que le rapport $S_{BET}$ / $S_{CTAB}$ est compris entre 1,0 et 1,5, de préférence entre 1,1 et 1,4, en particulier entre 1,15 et 1,35.

Les silices précipitées obtenues par le procédé de l'invention présentent de préférence une aptitude satisfaisante à la dispersion (dispersibilité) dans les polymères.

Leur diamètre médian ($D_{50M}$), après désagglomération aux ultra-sons, est en général inférieur à 6,0 $\mu$m, de préférence inférieur à 5,0 $\mu$m ; il peut être en particulier inférieur à 4,0 $\mu$m, par exemple inférieur à 3,0 $\mu$m.

Elles peuvent posséder également une vitesse de désagglomération $\alpha$, mesurée au test de désagglomération aux ultra-sons en mode pulsé décrit précédemment, à 100 % de puissance d'une sonde à ultra-sons de 600 watts, d'au moins 0,020 $\mu$m$^{-1}$.min$^{-1}$.

Le nombre de silanols par nm$^2$, $N_{SiOH/nm2}$, des silices précipitées obtenues par le procédé de l'invention est généralement compris entre 3,5 et 6, notamment entre 3,9 et 5,5.

Le pH des silices précipitées obtenues par le procédé de l'invention est habituellement compris entre 6,2 et 7,6, notamment entre 6,4 et 7,4.

Elles peuvent se présenter sous forme de billes sensiblement sphériques, en particulier de taille moyenne d'au moins 80 $\mu$m.

Cette taille moyenne des billes peut être d'au moins 100 $\mu$m, par exemple d'au moins 150 $\mu$m ; elle est généralement d'au plus 300 $\mu$m et se situe de préférence entre 100 et 270 $\mu$m, notamment entre 200 et 260 $\mu$m. Cette taille moyenne est déterminée selon la norme NF X 11507 (décembre 1970) par tamisage à sec et détermination du diamètre correspondant à un refus cumulé de 50 %.

Les silices obtenues par le procédé de l'invention peuvent également se présenter sous forme de poudre, généralement de taille moyenne d'au moins 3 $\mu$m, en particulier d'au moins 10 $\mu$m, par exemple d'au moins 15 $\mu$m ; celle-ci peut être comprise entre 15 et 60 $\mu$m) (notamment entre 20 et 45 $\mu$m) ou entre 30 et 150 $\mu$m (notamment entre 45 et 120 $\mu$m).

Elles peuvent aussi se présenter sous forme de granulés (en général de forme sensiblement parallélépipédique), en particulier de taille d'au moins 1 mm, par exemple comprise entre 1 et 10 mm, notamment selon l'axe de leur plus grande dimension (longueur).

La silice précipitée préparée par le procédé selon l'invention, en particulier par le mode de réalisation préféré dudit procédé, trouve une application particulièrement intéressante dans le renforcement des polymères, naturels ou synthétiques.

Les compositions de polymère(s) dans lesquelles elle est utilisée, notamment à titre de charge renforçante, sont en général à base d'un ou plusieurs polymères ou copolymères, en particulier d'un ou plusieurs élastomères, notamment les élastomères thermoplastiques, présentant, de préférence, au moins une température de transition vitreuse comprise entre -150 et +300 °C, par exemple entre -150 et +20 °C.

A titre de polymères possibles, on peut citer les polymères diéniques, en particulier les élastomères diéniques.

Par exemple, on peut utiliser les polymères ou copolymères dérivant de monomères aliphatiques ou aromatiques, comprenant au moins une insaturation (tels que, notamment, l'éthylène, le propylène, le butadiène, l'isoprène, le styrène), le polyacrylate de butyle, ou leurs mélanges ; on peut également citer les élastomères silicones, les élastomères fonctionnalisés (par exemple par des fonctions susceptibles de réagir avec la surface de la silice) et les polymères halogénés. On peut mentionner les polyamides.

Le polymère (copolymère) peut être un polymère (copolymère) en masse, un latex de polymère (copolymère) ou bien une solution de polymère (copolymère) dans l'eau ou dans tout autre liquide dispersant approprié.

A titre d'élastomères diéniques, on peut mentionner par exemple les polybutadiènes (BR), les polyisoprènes (IR), les copolymères de butadiène, les copolymères d'isoprène, ou leurs mélanges, et en particulier les copolymères de styrène-butadiène (SBR, notamment ESBR (émulsion) ou SSBR (solution)), les copolymères d'isoprène-butadiène (BIR), les copolymères d'isoprène-styrène (SIR), les copolymères d'isoprène-butadiène-styrène (SBIR), les terpolymères éthylène-propylène-diène (EPDM).

On peut également citer le caoutchouc naturel (NR).

Les compositions de polymère(s) peuvent être vulcanisées au soufre (on obtient alors des vulcanisats) ou réticulées notamment aux péroxydes.

En général, les compositions de polymère(s) comprennent en outre au moins un agent de couplage (silice/polymère) et/ou au moins un agent de recouvrement ; elles peuvent également comprendre, entre autres, un agent antioxydant.

On peut notamment utiliser comme agents de couplage, à titre d'exemples non limitatifs, des silanes polysulfurés, dits "symétriques" ou "asymétriques" ; on peut citer plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-(triméthoxysilyl)propyl) ou les polysulfures de bis(3-(triéthoxysilyl)propyl). On peut également citer le tétrasulfure de monoéthoxydiméthylsilylpropyle.

L'agent de couplage peut être préalablement greffé sur le polymère.

Il peut être également employé à l'état libre (c'est-à-dire non préalablement greffé) ou greffé à la surface de la silice. Il en est de même de l'éventuel agent de recouvrement.

L'utilisation d'une silice précipitée préparée par le procédé selon l'invention peut permettre de réduire sensiblement, par exemple de l'ordre de 20 %, la quantité d'agent de couplage à employer dans des compositions de polymère(s) renforcées par de la silice, tout en maintenant un compromis de propriétés sensiblement identique.

A l'agent de couplage peut éventuellement être associé un "activateur de couplage" approprié, c'est-à-dire un composé qui, mélangé avec cet agent de couplage, augmente l'efficacité de ce dernier.

La proportion en poids de silice précipitée dans la composition de polymère(s) peut varier dans une gamme assez large. Elle représente habituellement 20 à 80 %, par exemple 30 à 70 %, de la quantité du (des) polymère(s).

La silice précipitée obtenue par le procédé de l'invention peut avantageusement constituer la totalité de la charge inorganique renforçante, et même la totalité de la charge renforçante, de la composition de polymère(s).

Cependant, à cette silice précipitée obtenue par le procédé de l'invention peut être éventuellement associée au moins une autre charge renforçante, comme en particulier une silice hautement dispersible commerciale telle que par exemple la Z1165MP, la Z1115MP, une silice précipitée traitée (par exemple "dopée" à l'aide d'un cation comme l'aluminium), une autre charge inorganique renforçante telle que par exemple l'alumine, voire même une charge organique renforçante, notamment du noir de carbone (éventuellement recouvert d'une couche inorganique, par exemple de silice). La silice précipitée obtenue par le procédé de l'invention constitue alors de préférence au moins 50 %, voire au moins 80 %, en poids de la totalité de la charge renforçante.

On peut citer, à titre d'exemples, non limitatifs, d'articles finis à base des compositions de polymère(s) décrites précédemment (notamment à base des vulcanisats mentionnés ci-dessus) les semelles de chaussures (de préférence en présence d'un agent de couplage (silice/polymère), par exemple le tétrasulfure de monoéthoxydiméthylsilylpropyle), les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les gaines, les cables et les courroies de transmissions.

Pour les semelles de chaussures, on peut mettre en oeuvre, de manière avantageuse en présence d'un agent de couplage (silice/polymère), par exemple le tétrasulfure de monoéthoxydiméthylsilylpropyle, des compositions de polymère(s) à base par exemple de caoutchouc naturel (NR), de polyisoprène (IR), de polybutadiène (BR), de copolymère styrène-butadiène (SBR), de copolymère butadiène-acrylonitrile (NBR).

Pour les pièces techniques, on peut mettre en oeuvre, par exemple en présence d'un agent de couplage (silice/polymère), des compositions de polymère(s) à base par exemple de caoutchouc naturel (NR), de polyisoprène (IR), de polybutadiène (BR), de copolymère styrène-butadiène (SBR), de polychloroprène, de copolymère butadiène-acrylonitrile (NBR), de caoutchouc nitrile hydrogéné ou carboxylé, de copolymère isobutylène-isoprène (IIR), de caoutchouc butyle halogéné (notamment bromé ou chloré), de copolymère éthylène-propylène (EPM), de terpolymère éthylène-propylène-diène (EPDM), de polyéthylène chloré, de polyéthylène chlorosulfoné, de matrices à base de silicone(s) (notamment de matrices élastomères silicones vulcanisables à chaud ou à froid), de caoutchouc épichlorhydrine, de caoutchouc fluorocarboné, de polyacrylates.

La silice précipitée préparée par le procédé selon l'invention peut être également employée comme support de catalyseur, comme absorbant de matières actives (en particulier support de liquides, par exemple utilisés dans l'alimentation, tels que les vitamines (vitamine E), le chlorure de choline), comme agent viscosant, texturant ou anti-mottant, comme élément pour séparateurs de batteries, comme additif pour dentifrice, pour papier.

Les exemples suivants illustrent l'invention sans toutefois en limiter la portée.

### EXEMPLE 1

Dans un réacteur en acier inoxydable de 25 litres, muni d'un système d'agitation par hélices et d'un chauffage par double enveloppe, on introduit :

- 7,2 litres d'eau
- 4050 grammes de silicate de sodium aqueux présentant un rapport pondéral $SiO_2/Na_2O$ égal à 3,45 et ayant une concentration de 235 g/L
- 125 grammes de sulfate de sodium $Na_2SO_4$ (électrolyte).

La concentration en silicate (exprimée en $SiO_2$) dans le pied de cuve est alors de 74 g/L.

Le mélange est homogénéisé par agitation et porté à 82 °C. L'ensemble de la réaction est réalisé sous agitation (300 tr/min, agitation hélice).

On introduit dans le mélange de l'acide sulfurique de concentration égale à 80 g/L, à un débit de 80 g/min, jusqu'à ce que le pH du milieu réactionnel atteigne une valeur de 8 (soit 4380 grammes d'acide sulfurique en 55 minutes environ). Après 30 minutes d'ajout d'acide sulfurique, la température du milieu réactionnel est portée à 94 °C.

Une fois l'acidification achevée, on introduit simultanément dans le milieu réactionnel, et ce pendant 30 minutes, une solution de silicate de sodium (de rapport pondéral $SiO_2/Na_2O$ égal à 3,45) ayant une concentration de 235 g/L à un débit de 34 g/min, et de l'acide sulfurique de concentration égale à 80 g/L, à un débit régulé de manière à maintenir le pH du milieu réactionnel à une valeur de 8.

Au terme des 30 minutes d'addition simultanée, on introduit de l'acide sulfurique de concentration égale à 80 g/L, à un débit de 80 g/min, jusqu'à ce que le pH du milieu réactionnel atteigne une valeur de 3 (soit 1288 grammes d'acide sulfurique en 16 minutes environ).

On introduit ensuite simultanément dans le milieu réactionnel, et ce pendant 15 minutes, une solution de silicate de sodium (de rapport pondéral $SiO_2/Na_2O$ égal à 3,45) ayant une concentration de 235 g/L à un débit de 34 g/min, et de l'acide sulfurique de concentration égale à 80 g/L, à un débit régulé de manière à maintenir le pH du milieu réactionnel à une valeur de 3.

Au terme des 15 minutes de cette seconde addition simultanée, on introduit une solution de silicate de sodium, du type décrit ci-avant, à un débit de 34 g/min de manière à remonter le pH du milieu réactionnel à 5,2 (soit 783 grammes de solution de silicate en 23 minutes).

On obtient à l'issue de la réaction une bouillie réactionnelle de silice précipitée qui est maintenue sous agitation, à une température de 94 °C, pendant 5 minutes. Après ce mûrissement, la bouillie de silice précipitée est récupérée, par vidange du réacteur.

La bouillie est filtrée et lavée sous vide (extrait sec de 14 % en poids). Le gâteau de filtration obtenu est lavé 4 fois avec 5 litres d'eau. Il est ensuite remis en suspension par délitage mécanique en présence d'eau et d'aluminate de sodium (rapport pondéral Al/$SiO_2$ de 0,3 %). La bouillie résultante (extrait sec de 10 % en poids) est séchée au moyen d'un atomiseur à turbines.

Les caractéristiques de la silice précipitée P1 obtenue (sous forme de poudre) sont alors les suivantes :

Surface spécifique CTAB : 192 $m^2$/g
Surface spécifique BET : 220 $m^2$/g
Taille médiane d50 d'agrégats : 61 nm
$V_{(d5 - d50)}$ / $V_{(d5 - d100)}$ : 0,73
Mode (porosimétrie Hg) : 14,7 nm
C (SAXS) : 0,350
$D_{50M}$ (après désagglomération aux ultra-sons) : 2,4 $\mu$m
$\alpha$ : 0,045 $\mu m^{-1}.min^{-1}$
$N_{SiOH/nm2}$ : 5,0
pH : 7,3

On constate, notamment par MET, que la silice précipitée P1 est formée d'agrégats de grosses particules primaires (gpp) de silice, de diamètre médian en nombre de 13,5 nm, à la surface desquels se trouvent des petites particules primaires (ppp) de silice, de diamètre médian en nombre de 3,9 nm.

EXEMPLE 2

Dans un réacteur en acier inoxydable de 2000 litres, muni d'un système d'agitation par hélices et d'un chauffage par double enveloppe, on introduit :

- 593 litres d'eau
- 329 litres de silicate de sodium aqueux présentant un rapport pondéral $SiO_2$/$Na_2O$ égal à 3,45 et ayant une concentration de 235 g/L
- 13,4 kg de sulfate de sodium $Na_2SO_4$ (électrolyte).

La concentration en silicate (exprimée en $SiO_2$) dans le pied de cuve est alors de 75 g/L.

Le mélange est homogénéisé par agitation et porté à 95 °C. L'ensemble de la réaction est réalisé sous agitation (80 tr/min).

On introduit dans le mélange de l'acide sulfurique de concentration égale à 80 g/L à un débit de 490 L/h pendant 15 minutes, puis à un débit de 1480 L/h jusqu'à ce que le pH du milieu réactionnel atteigne une valeur de 8.

Une fois l'acidification achevée, on introduit simultanément dans le milieu réactionnel, et ce pendant 20 minutes, une solution de silicate de sodium (de rapport pondéral $SiO_2$/$Na_2O$ égal à 3,45) ayant une concentration de 235 g/L à un débit de 198 L/h, et de l'acide sulfurique de concentration égale à 80 g/L, à un débit régulé de manière à maintenir le pH du milieu réactionnel à une valeur de 8.

Au terme des 20 minutes d'addition simultanée, on introduit de l'acide sulfurique de concentration égale à 80 g/L, à un débit de 400 L/h, jusqu'à ce que le pH du milieu réactionnel atteigne une valeur de 4.

On introduit ensuite simultanément dans le milieu réactionnel, et ce pendant 85 minutes, une solution de silicate de sodium (de rapport pondéral $SiO_2$/$Na_2O$ égal à 3,45) ayant une concentration de 235 g/L à un débit de 85 L/h, et de l'acide sulfurique de concentration égale à 80 g/L, à un débit régulé de manière à maintenir le pH du milieu réactionnel à une valeur de 4.

Au terme des 85 minutes de cette seconde addition simultanée, on introduit une solution de silicate de sodium, du type décrit ci-avant, à un débit de 97 L/h de manière à remonter le pH du milieu réactionnel à 5,2.

On obtient à l'issue de la réaction une bouillie réactionnelle de silice précipitée qui est maintenue sous agitation, à une température de 95 °C, pendant 5 minutes. Après ce mûrissement, la bouillie de silice précipitée est récupérée, par vidange du réacteur.

La bouillie est filtrée par filtre presse (extrait sec de 25 % en poids). Le gâteau de filtration obtenu est remis en suspension par délitage mécanique en présence d'eau et d'aluminate de sodium (rapport pondéral Al/SiO$_2$ de 0,3 %). La bouillie résultante est ensuite séchée au moyen d'un atomiseur à buses.

Les caractéristiques de la silice précipitée P2 obtenue (sous forme de billes sensiblement sphériques) sont alors les suivantes :

Surface spécifique CTAB : 151 m$^2$/g

Surface spécifique BET : 189 m$^2$/g

Taille médiane d50 d'agrégats : 78 nm

$V_{(d5 - d50)}$ / $V_{(d5 - d100)}$ : 0,75

Mode (porosimétrie Hg) : 23,0 nm

C (SAXS) : 0,640

D$_{50M}$ (après désagglomération aux ultra-sons) : 2,2 $\mu$m

$\alpha$ : 0,031 $\mu$m$^{-1}$.min$^{-1}$

N$_{SiOH/nm2}$ : 4,8

pH : 6,6

On constate, notamment par MET, que la silice précipitée P2 est formée d'agrégats de grosses particules primaires (gpp) de silice, de diamètre médian en nombre de 18,3 nm, à la surface desquels se trouvent des petites particules primaires (ppp) de silice, de diamètre médian en nombre de 4,3 nm.

EXEMPLE 3

Dans un réacteur en acier inoxydable de 25 litres, muni d'un système d'agitation par hélices et d'un chauffage par double enveloppe, on introduit :

- 7,91 litres d'eau
- 4286 grammes de silicate de sodium aqueux présentant un rapport pondéral SiO$_2$/Na$_2$O égal à 3,45 et ayant une concentration de 235 g/L
- 134 grammes de sulfate de sodium Na$_2$SO$_4$ (électrolyte).

La concentration en silicate (exprimée en SiO$_2$) dans le pied de cuve est alors de 72 g/L.

Le mélange est homogénéisé par agitation et porté à 92 °C. L'ensemble de la réaction est réalisé sous agitation (300 tr/min, agitation hélice).

On introduit dans le mélange de l'acide sulfurique de concentration égale à 80 g/L, à un débit de 146 g/min, jusqu'à ce que le pH du milieu réactionnel atteigne une valeur de 8 (soit 4380 grammes d'acide sulfurique en 30 minutes environ).

Une fois l'acidification achevée, on introduit simultanément dans le milieu réactionnel, et ce pendant 25 minutes, une solution de silicate de sodium (de rapport pondéral SiO$_2$/Na$_2$O égal à 3,45) ayant une concentration de 235 g/L à un débit de 32 g/min, et de l'acide sulfurique de concentration égale à 80 g/L, à un débit régulé de manière à maintenir le pH du milieu réactionnel à une valeur de 8.

Au terme des 30 minutes d'addition simultanée, on introduit de l'acide sulfurique de concentration égale à 80 g/L, à un débit de 80 g/min, jusqu'à ce que le pH du milieu réactionnel atteigne une valeur de 4 (soit 418 grammes d'acide sulfurique en 5 minutes environ).

On introduit ensuite simultanément dans le milieu réactionnel, et ce pendant 140 minutes, une solution de silicate de sodium (de rapport pondéral SiO$_2$/Na$_2$O égal à 3,45) ayant une concentration de 235 g/L à un débit de 19 g/min, et de l'acide sulfurique de concentration égale à 80 g/L, à un débit régulé de manière à maintenir le pH du milieu réactionnel à une valeur de 4.

Au terme des 140 minutes de cette seconde addition simultanée, on introduit une solution de silicate de sodium, du type décrit ci-avant, à un débit de 19 g/min de manière à remonter le pH du milieu réactionnel à 5,2 (soit 98 grammes de solution de silicate en 5 minutes).

On obtient à l'issue de la réaction une bouillie réactionnelle de silice précipitée qui est maintenue sous agitation, à une température de 94 °C, pendant 5 minutes. Après ce mûrissement, la bouillie de silice précipitée est récupérée, par vidange du réacteur.

La bouillie est filtrée et lavée sous vide (extrait sec de 18 % en poids). Le gâteau de filtration obtenu est lavé 4 fois avec 5 litres d'eau. Il est ensuite remis en suspension par délitage mécanique en présence d'eau et d'aluminate de sodium (rapport pondéral Al/SiO$_2$ de 0,3 %). La bouillie résultante (extrait sec de 10 % en poids) est séchée au moyen d'un atomiseur à turbines.

Les caractéristiques de la silice précipitée P3 obtenue (sous forme de poudre) sont alors les suivantes :

Surface spécifique CTAB : 183 $m^2$/g
Surface spécifique BET : 240 $m^2$/g
Taille médiane d50 d'agrégats : 83 nm
$V_{(d5 - d50)}$ / $V_{(d5 - d100)}$ : 0,81
Mode (porosimétrie Hg) : 20,5 nm
C (SAXS) : 0,466
$D_{50M}$ (après désagglomération aux ultra-sons) : 3,5 $\mu$m
$\alpha$ : 0,032 $\mu m^{-1}.min^{-1}$
$N_{SiOH/nm2}$ : 3,9
pH : 6,5

On constate, notamment par MET, que la silice précipitée P3 est formée d'agrégats de grosses particules primaires (gpp) de silice, de diamètre médian en nombre de 22,0 nm, à la surface desquels se trouvent des petites particules primaires (ppp) de silice, de diamètre médian en nombre de 3,9 nm.

EXEMPLE 4

Dans un réacteur en acier inoxydable de 25 litres, muni d'un système d'agitation par hélices et d'un chauffage par double enveloppe, on introduit :

- 6,0 litres d'eau
- 4833 grammes de silicate de sodium aqueux présentant un rapport pondéral $SiO_2$/$Na_2O$ égal à 3,45 et ayant une concentration de 235 g/L
- 157,5 grammes de sulfate de sodium $Na_2SO_4$ (électrolyte).

La concentration en silicate (exprimée en $SiO_2$) dans le pied de cuve est alors de 93 g/L.
Le mélange est homogénéisé par agitation et porté à 94 °C. L'ensemble de la réaction est réalisé sous agitation (300 tr/min, agitation hélice).
On introduit dans le mélange de l'acide sulfurique de concentration égale à 80 g/L, à un débit de 104 g/min, jusqu'à ce que le pH du milieu réactionnel atteigne une valeur de 8 (soit 4794 grammes d'acide sulfurique en 46 minutes environ).
Une fois l'acidification achevée, on introduit simultanément dans le milieu réactionnel, et ce pendant 15 minutes, une solution de silicate de sodium (de rapport pondéral $SiO_2$/$Na_2O$ égal à 3,45) ayant une concentration de 235 g/L à un débit de 80 g/min, et de l'acide sulfurique de concentration égale à 80 g/L, à un débit régulé de manière à maintenir le pH du milieu réactionnel à une valeur de 8.
Au terme des 15 minutes d'addition simultanée, on introduit de l'acide sulfurique de concentration égale à 80 g/L, à un débit de 80 g/min, jusqu'à ce que le pH du milieu réactionnel atteigne une valeur de 4 (soit 597 grammes d'acide sulfurique en 7 minutes environ).
On introduit ensuite simultanément dans le milieu réactionnel, et ce pendant 53 minutes, une solution de silicate de sodium (de rapport pondéral $SiO_2$/$Na_2O$ égal à 3,45) ayant une concentration de 235 g/L à un débit de 15 g/min, et de l'acide sulfurique de concentration égale à 80 g/L, à un débit régulé de manière à maintenir le pH du milieu réactionnel à une valeur de 4.
Au terme des 53 minutes de cette seconde addition simultanée, on introduit une solution de silicate de sodium, du type décrit ci-avant, à un débit de 15 g/min de manière à remonter le pH du milieu réactionnel à 5,2 (soit 91 grammes de solution de silicate en 6 minutes).
On obtient à l'issue de la réaction une bouillie réactionnelle de silice précipitée qui est maintenue sous agitation, à une température de 94 °C, pendant 5 minutes. Après ce mûrissement, la bouillie de silice précipitée est récupérée, par vidange du réacteur.
La bouillie est filtrée et lavée sous vide (extrait sec de 14 % en poids). Le gâteau de filtration obtenu est lavé 4 fois avec 5 litres d'eau. Il est ensuite remis en suspension par délitage mécanique en présence d'eau et d'aluminate de sodium (rapport pondéral Al/$SiO_2$ de 0,3 %). La bouillie résultante (extrait sec de 10 % en poids) est séchée au moyen d'un atomiseur à turbines.
Les caractéristiques de la silice précipitée P4 obtenue (sous forme de poudre) sont alors les suivantes :

Surface spécifique CTAB : 96 $m^2$/g

Surface spécifique BET : 126 m$^2$/g
Taille médiane d50 d'agrégats : 163 nm
$V_{(d5 - d50)}$ / $V_{(d5 - d100)}$ : 0,86
Mode (porosimétrie Hg) : 72,0 nm
C (SAXS) : 0,686
$D_{50M}$ (après désagglomération aux ultra-sons) : 4,6 µm
pH : 7,3

On constate, notamment par MET, que la silice précipitée P4 est formée d'agrégats de grosses particules primaires (gpp) de silice, de diamètre médian en nombre de 29,0 nm, à la surface desquels se trouvent des petites particules primaires (ppp) de silice, de diamètre médian en nombre de 4,2 nm.

EXEMPLE 5

Propriétés en matrice caoutchouc.
L'évaluation en matrice caoutchouc porte sur :

- une première formulation de type sSBR où la silice de la présente invention (préparée dans l'exemple 2) est comparée à une silice témoin commerciale (Z1165MP) à même quantité de silice engagée (80 pce ou parties en poids en charge d'élastomère), puis à même dureté,
- une seconde formulation de type EPDM où la silice de la présente invention (préparée dans l'exemple 2) est comparée à une silice témoin commerciale (Z1165MP) à même quantité de silice engagée (40 pce ou parties en poids en charge d'élastomère), puis à même dureté.

La silice témoin Z1165MP utilisée présente les caractéristiques suivantes :

Z1165MP
Surface spécifique CTAB : 156 m$^2$/g
Surface spécifique BET : 162 m$^2$/g
Taille médiane d50 d'agrégats : 47 nm
$V_{(d5 - d50)}$ / $V_{(d5 - d100)}$ : 0,67
Mode (porosimétrie Hg) : 15,3 nm
C (SAXS) : 0,247
$D_{50M}$ (après désagglomération aux ultra-sons) : 3,5 µm

A- Evaluation en matrice sSBR à même quantité de silice engagée

Constitution des compositions élastomériques

Dans un mélangeur interne de type Haake, on prépare des compositions élastomériques dont la constitution, exprimée en parties en poids (pce), est indiquée dans le tableau I ci-dessous.

Tableau I : Formulations utilisées pour les mélanges

| Compositions | Témoin 1 | Composition 1 |
|---|---|---|
| SBR (1) | 137,5 | 137,5 |
| Silice 1 (2) | 80 | |
| Silice 2 (3) | | 80 |
| Agent de couplage (4) | 6,4 | 6,4 |
| ZnO | 2,5 | 2,5 |
| Acide stéarique | 2 | 2 |
| Antioxydant (5) | 1,9 | 1,9 |
| DPG (6) | 1,5 | 1,7 |
| CBS (7) | 2 | 2 |

(suite)

| Compositions | Témoin 1 | Composition 1 |
|---|---|---|
| TBzTD (8) | 0,2 | 0,2 |
| Soufre | 1,1 | 1,1 |

(1) SBR solution (Buna VSL5025-1 de la société Lanxess) avec 50 +/- 4 % de motifs vinyl ; 25 +/-2 % de motifs styrène ; Tg voisin de -20 °C ; 100 phr de SBR étendu avec 37,5 +/- 2,8 % en poids d'huile

(2) Silice Z1165 MP de la société Rhodia

(3) Silice obtenue par le procédé de l'invention (exemple 2 ci-dessus)

(4) TESPT (Z-6940 de la société Dow Corning)

(5) N-1,3-diméthylbutyl-N-phényl-para-phénylènediamine (Santoflex 6-PPD de la société Flexsys)

(6) Diphénylguanidine (Rheonogran DPG-80 de la société RheinChemie)

(7) N-cyclohexyl-2-benzothiazyl-sulfénamide (Rhénogran CBS-80 de la société RheinChemie)

(8) Disulfure de tétrabenzylthiurame (Rhenogran TBzTD-70 de la société RheinChemie).

**Procédé de préparation**

Chacune des compositions élastomériques est préparée en deux phases successives. Une première phase, dite non-productive, permet un travail thermomécanique à haute température (jusqu'à atteindre une température maximum comprise entre 130 et 160 °C). Elle est suivie d'une seconde phase de travail mécanique à des températures inférieures à 110 °C ;cette phase permet l'introduction du système de vulcanisation.

La première phase est réalisée dans un mélangeur interne de type Haake (capacité de 300 mL). Le coefficient de remplissage est de 0,75. La température initiale et la vitesse des rotors sont fixées à chaque fois de manière à atteindre des températures de tombée de mélange voisines de 130-160 °C.

Décomposée ici en deux passes, cette phase permet d'incorporer, dans une première passe, l'élastomère puis la silice (introduction fractionnée) avec l'agent de couplage et l'acide stéarique. Pour cette passe, la durée est comprise entre 2 et 10 minutes.

Après refroidissement du mélange (température inférieure à 100°C), une seconde passe permet d'incorporer l'oxyde de zinc et l'agent antioxydant. Pour cette passe, la durée est comprise entre 2 et 5 minutes.

Après refroidissement du mélange (température inférieure à 100°C), la seconde phase, dite productive, permet l'introduction du système de vulcanisation (soufre et accélérateurs DPG, CBS, TBzTD). Elle est réalisée sur un mélangeur à cylindres, préchauffé à 50 °C. La durée de cette phase est comprise entre 5 et 10 minutes.

Chaque mélange final est ensuite calandré sous la forme de plaques d'épaisseur de 2-3 mm.

Sur les mélanges obtenus dits crus, une évaluation de leurs propriétés rhéologiques permet de mesurer la viscosité à crue et d'optimiser la durée et la température de vulcanisation.

Ensuite, les propriétés mécaniques et dynamiques des mélanges vulcanisés à l'optimum sont mesurées.

**Propriétés rhéologiques**

- **Viscosité des mélanges crus**

La consistance Mooney est mesurée sur les compositions à l'état cru à 100 °C au moyen d'un rhéomètre MV 2000 selon la norme NF T 43 005.

La valeur du couple lue au bout de 4 minutes après un préchauffage d'une minute (Mooney Large (1+4) à 100 °C) est indiquée dans le tableau II.

Tableau II

| Compositions | Témoin 1 | Composition 1 |
|---|---|---|
| ML(1+4) - 100 °C | 94 | 96 |

On constate que la composition 1 contenant une silice obtenue par le procédé de l'invention présente une viscosité à crue voisine de celle de la composition témoin contenant une silice de surface spécifique CTAB proche.

EP 2 268 576 B2

## - Rhéométrie des compositions

Les mesures sont réalisées sur les compositions à l'état cru. On a porté dans le tableau III les résultats concernant le test de rhéologie qui est conduit à 160°C au moyen d'un rhéomètre ODR Monsanto 100 S selon la norme DIN 53529.

Selon ce test, chaque composition à tester est placée dans la chambre d'essai régulée à une température de 160 °C durant 30 minutes, et on mesure le couple résistant, opposé par la composition, à une oscillation de faible amplitude (3°) d'un rotor biconique inclus dans la chambre d'essai, la composition remplissant complètement la chambre considérée.

A partir de la courbe de variation du couple en fonction du temps, on détermine :

le couple minimum (Cm) illustrant la viscosité de la composition à la température considérée (160 °C),
le couple maximum (CM),
Ts2 (ou temps de grillage) correspondant au temps nécessaire pour avoir une remontée de 2 points au-dessus du couple minimum à la température considérée (160 °C) et reflétant le temps pendant lequel le contrôle du mélange est possible, c'est-à-dire le temps pendant lequel il est possible de mettre en oeuvre le mélanges cru à cette température sans avoir d'initiation de la vulcanisation (le mélange durcit à partir de Ts2),
T90 correspondant au temps au bout duquel 90 % de la vulcanisation complète ont été réalisées,
Vret_max illustrant la vitesse de réticulation.

Les résultats obtenus sont indiqués dans le tableau III.

Tableau III

| Compositions | Témoin 1 | Composition 1 |
|---|---|---|
| Cm (dN.m) | 17,1 | 15,9 |
| CM (dN.m) | 62,5 | 56,6 |
| Ts2 (min) | 4,8 | 5,0 |
| T90 (min) | 17,5 | 15,4 |
| Vret_max (dN.m/min) | 4,9 | 5,3 |

On constate que la composition 1 contenant une silice obtenues par le procédé de l'invention présente un ensemble très satisfaisant de propriétés rhéologiques, en particulier par rapport à la composition témoin.

En particulier, elle présente des valeurs de couples minimum et maximum plus faibles que celles de la composition témoin, ce qui traduit une plus grande facilité de mise en oeuvre du mélange préparé.

Et surtout la silice obtenue par le procédé de l'invention permet d'obtenir une cinétique de vulcanisation (Ts2, T90 et Vret_max) améliorée parrapport à celle obtenue avec la silice témoin, et ce sans pénaliser la viscosité du mélange cru (illustrée notamment par le couple minimum).

**Propriétés mécaniques des vulcanisats**

Les mesures sont réalisées sur les compositions vulcanisées à l'optimum (t98 (temps nécessaire pour obtenir un état de vulcanisation correspondant à 98 % de la vulcanisation complète)) pour une température de 160 °C.

Les essais de traction uniaxiale (modules 100 % et 300 %) sont réalisés conformément aux indications de la norme NF T 46002 avec des éprouvettes de type H2 à une vitesse de 500 mm/min sur un appareil INSTRON 5564.

Les modules x % correspondent à la contrainte mesurée à x % de déformation en traction.

Les propriétés mesurées sont rassemblées dans le tableau IV.

Tableau IV

| Compositions | Témoin 1 | Composition 1 |
|---|---|---|
| Module 100 % (MPa) | 2,98 | 2,47 |
| Module 300 % (MPa) | 15,4 | 14,1 |
| Module 300 % / Module 100 % | 5,2 | 5,7 |

On constate que la silice obtenue par le procédé de l'invention présente un caractère renforçant satisfaisant et confère en terme de modules à la composition élastomérique un comportement mécanique comparable à celui conféré par la silice témoin.

**Propriétés dynamiques des vulcanisats**

Les propriétés dynamiques sont mesurées sur un viscoanalyseur (Metravib VA3000), selon la norme ASTM D5992, en mode compression.

Les valeurs de facteur de perte (tan δ) et de module complexe en compression dynamique (E*) sont enregistrées sur des échantillons vulcanisés (éprouvette cylindrique de section 95 mm$^2$ et de hauteur 14 mm). L'échantillon est soumis au départ à une pré-déformation de 10% puis à une déformation sinusoïdale en compression alternée de +/- 2 %. Les mesures sont réalisées à 60 °C et à une fréquence de 10 Hz.

Les résultats, présentés dans le tableau V, sont le module complexe en compression (E* - 60 °C - 10 Hz) et le facteur de perte (tan δ - 60 °C - 10 Hz).

Tableau V

| Compositions | Témoin 1 | Composition 1 |
|---|---|---|
| E* - 60 °C - 10 Hz | 8,72 | 5,90 |
| Tan δ - 60 °C - 10 Hz | 0,137 | 0,096 |

Les valeurs du facteur de perte (tan δ) et d'amplitude du module élastique en cisaillement dynamique (ΔG') sont enregistrées sur des échantillons vulcanisés (éprouvette parallélépipédique de section 8 mm$^2$ et de hauteur 7 mm). L'échantillon est soumis à une déformation sinusoïdale en double cisaillement alternée à une température de 40 °C et à une fréquence de 10 Hz. Le processus de balayage en amplitude de déformations s'effectue selon un cycle aller-retour, allant de 0,1 à 50 %, puis retour de 50 à 0,1 %.

Les résultats, présentés dans le tableau VI, sont issus du balayage en amplitude de déformations au retour et concernent la valeur maximale du facteur de perte (tan δ max retour - 10 Hz) ainsi que l'amplitude du module élastique (ΔG' - 10 Hz) entre les valeurs à 0,1 % et 50 % de déformation (effet Payne).

Tableau VI

| Compositions | Témoin 1 | Composition 1 |
|---|---|---|
| Tan δ max retour - 40 °C - 10 Hz | 0,302 | 0,201 |
| ΔG' - 40 °C - 10 Hz (Mpa) | 3,20 | 1,45 |

La composition 1 contenant la silice obtenue par le procédé de l'invention présente de bonnes propriétés dynamiques, ce qui se révèle aussi particulièrement intéressant pour les propriétés des articles finis à base de cette composition.

Ainsi, on constate que, à 40 °C et 60 °C, la valeur du facteur de perte ou tangente δ (qui est le reflet de l'énergie absorbée ou restituée par le vulcanisat lors d'une déformation dans les conditions d'essai mentionnées) obtenue pour la composition 1 contenant la silice obtenue par le procédé de l'invention est améliorée par rapport à ce qui est obtenu pour la composition témoin, et ce indépendamment du mode de sollicitations dynamiques.

On constate également une réduction importante de la non-linéarité à 40 °C, associée à l'effet Payne (ΔG'), avec la silice obtenue par le procédé de l'invention

Ainsi, la silice obtenue par le procédé de l'invention permet l'obtention d'un compromis de propriétés rhéologiques, mécaniques et dynamiques, en particulier hystérétiques, en particulier un compromis hystérèse/renforcement, très satisfaisants, notamment par rapport à la silice témoin.

**B- Evaluation en matrice sSBR à même dureté**

**Constitution des compositions élastomériques**

Dans un mélangeur interne de type Haake, il est préparé des compositions élastomériques dont la constitution, exprimée en parties en poids (pce), est indiquée dans le tableau VII ci-dessous.

Tableau VII : Formulations utilisées pour les mélanges

| Compositions | Témoin 1 | Composition 2 |
|---|---|---|
| SBR (1) | 137,5 | 137,5 |
| Silice 1 (2) | 80 | |
| Silice 3 (3) | | 95 |
| Agent de couplage (4) | 6,4 | 7,2 |
| ZnO | 2,5 | 2,5 |
| Acide stéarique | 2 | 2 |
| Antioxydant (5) | 1,9 | 1,9 |
| DPG (6) | 1,5 | 2,1 |
| CBS (7) | 2 | 2 |
| TBzTD (8) | 0,2 | 0,2 |
| Soufre | 1,1 | 1,1 |

(1) SBR solution (Buna VSL5025-1 de la société Lanxess) avec 50 +/- 4 % de motifs vinyl ; 25 +/-2 % de motifs styrène ; Tg voisin de -20 °C ; 100 phr de SBR étendu avec 37,5 +/- 2,8 % en poids d'huile

(2) Silice Z1165 MP de la société Rhodia

(3) Silice obtenue par le procédé de l'invention (exemple 2 cidessus)

(4) TESPT (Z-6940 de la société Dow Corning)

(5) N-1,3-diméthylbutyl-N-phényl-para-phénylènediamine (Santoflex 6-PPD de la société Flexsys)

(6) Diphénylguanidine (Rheonogran DPG-80 de la société RheinChemie)

(7) N-cyclohexyl-2-benzothiazyl-sulfénamide (Rhénogran CBS-80 de la société RheinChemie)

(8) Disulfure de tétrabenzylthiurame (Rhenogran TBzTD-70 de la société RheinChemie).

**Procédé de préparation**

Le procédé de préparation de chacune des compositions élastomériques est identique à celui décrit précédemment.

Sur les mélanges obtenus dits crus, une évaluation de leurs propriétés rhéologiques permet de mesurer la viscosité à crue et d'optimiser la durée et la température de vulcanisation.

Ensuite, les propriétés mécaniques et dynamiques des mélanges vulcanisés à l'optimum sont mesurées.

**Propriétés rhéologiques**

**- Viscosité des mélanges crus**

Comme précédemment, la consistance Mooney est mesurée sur les compositions à l'état cru à 100 °C au moyen d'un rhéomètre MV 2000 selon la norme NF T 43 005.

La valeur du couple lue au bout de 4 minutes après un préchauffage d'une minute (Mooney Large (1+4) à 100 °C) est indiquée dans le tableau VIII.

Tableau VIII

| Compositions | Témoin 1 | Composition 2 |
|---|---|---|
| ML(1+4) - 100 °C | 94 | 104 |

On constate que l'augmentation du taux de charge de la silice obtenue par le procédé de l'invention (composition 2) n'induit pas une augmentation trop importante de la viscosité à crue par rapport à la composition témoin 1.

- **Rhéométrie des compositions**

Les mesures sont réalisées comme précédemment à une température de 160 °C durant 30 minutes au moyen d'un rhéomètre ODR Monsanto 100 S selon la norme DIN 53529.

Les résultats obtenus sont indiqués dans le tableau IX.

Tableau IX

| Compositions | Témoin 1 | Composition 2 |
|---|---|---|
| Cm (dN.m) | 17,1 | 17,9 |
| CM (dN.m) | 62,5 | 58,2 |
| Ts2 (min) | 4,8 | 4,3 |
| T90 (min) | 17,5 | 18,2 |
| Vret_max (dN.m/min) | 4,9 | 4,6 |

On constate que l'augmentation du taux de charge de la silice obtenue par le procédé de l'invention (composition 2) par rapport au mélange témoin n'induit pas de dégradations excessives des propriétés rhéométriques.

**Propriétés mécaniques des vulcanisats**

Les mesures sont réalisées sur les compositions vulcanisées à l'optimum (t98) pour une température de 160 °C.

Les essais de traction uniaxiale (modules 100 % et 200 %) sont réalisés comme précédemment (norme NF T 46002).

La mesure de dureté Shore A des vulcanisats est réalisée selon les indications de la norme ASTM D2240. La valeur donnée est mesurée à 15 secondes.

Les propriétés mesurées sont rassemblées dans le tableau X.

Tableau X

| Compositions | Témoin 1 | Composition 2 |
|---|---|---|
| Module 100 % (MPa) | 2,98 | 3,18 |
| Module 200 % (MPa) | 8,28 | 9,97 |
| Module 200 % / Module 100 % | 2,8 | 3,1 |
| | | |
| Dureté Shore A - 15 s (pts) | 63 | 62 |

On constate qu'une augmentation du taux de charge de la silice obtenue par le procédé de l'invention (composition 2) permet d'atteindre une dureté comparable à celle de la composition témoin, tout en conférant un caractère renforçant très satisfaisant, en particulier amélioré par rapport à celui obtenu avec la silice témoin.

**Propriétés dynamiques des vulcanisats**

Les propriétés dynamiques sont mesurées comme précédemment au moyen d'un viscoanalyseur (Metravib VA3000), selon la norme ASTM D5992, en mode compression.

Les résultats, présentés dans le tableau XI, sont le module complexe en compression (E* - 60 °C - 10 Hz) et le facteur de perte (tan $\delta$ - 60 °C - 10 Hz).

Tableau XI

| Compositions | Témoin 1 | Composition 2 |
|---|---|---|
| E* - 60 °C - 10 Hz | 8,72 | 6,94 |
| Tan $\delta$ - 60 °C - 10 Hz | 0,137 | 0,110 |

Puis, les propriétés dynamiques en mode cisaillement sont mesurées comme précédemment au moyen d'un viscoanalyseur (Metravib VA3000), selon la norme ASTM D5992, et les résultats sont indiqués dans le tableau XII.

Tableau XII

| Compositions | Témoin 1 | Composition 2 |
|---|---|---|
| Tan δ max retour - 40 °C - 10 Hz | 0,302 | 0,230 |
| ΔG' - 40 °C - 10 Hz | 3,20 | 2,05 |

La composition 2 contenant la silice obtenue par le procédé de l'invention présente de bonnes propriétés dynamiques, ce qui se révèle aussi particulièrement intéressant pour les propriétés des articles finis à base de cette composition.

On constate encore que, à 40 °C et 60 °C, la valeur du facteur de perte ou tangente δ (qui est le reflet de l'énergie absorbée ou restituée par le vulcanisat lors d'une déformation dans les conditions d'essai mentionnées) obtenue pour la composition 2 contenant la silice obtenue par le procédé de l'invention est améliorée par rapport à ce qui est obtenu pour la composition témoin, et ce indépendamment du mode de sollicitations dynamiques.

On constate également une réduction importante de la non-linéarité à 40 °C, associée à l'effet Payne (ΔG'), avec la silice obtenue par le procédé de l'invention

Ainsi, silice obtenue par le procédé de l'invention permet l'obtention d'un compromis de propriétés rhéologiques, mécaniques et dynamiques, en particulier hystérétiques, en particulier un compromis hystérèse/renforcement, très satisfaisants, notamment par rapport à la silice témoin.

**C- Evaluation en matrice EPDM**

**Constitution des compositions élastomériques**

Dans un mélangeur interne de type Haake, on prépare des compositions élastomériques dont la constitution, exprimée en parties en poids (pce), est indiquée dans le tableau XIII ci-dessous.

Tableau XIII : Formulations utilisées pour les mélanges

| Compositions | Témoin 4 | Comp. 3 | Comp. 4 |
|---|---|---|---|
| EPDM (1) | 100 | 100 | 100 |
| Silice 1 (2) | 40 | | |
| Silice 3 (3) | | 40 | 48 |
| Agent de couplage (4) | 1,6 | 1,5 | 1,8 |
| Huile (5) | 20 | 20 | 20 |
| ZnO | 4,0 | 4,0 | 4,0 |
| Acide stéarique | 2 | 2 | 2 |
| Antioxydant (6) | 1 | 1 | 1 |
| MBI (7) | 1 | 1 | 1 |
| MBT (8) | 1,1 | 1,1 | 1,1 |
| ZDBC (9) | 1,1 | 1,1 | 1,1 |
| TBzTD (10) | 1,6 | 1,6 | 1,6 |

(suite)

| Compositions | Témoin 4 | Comp. 3 | Comp. 4 |
|---|---|---|---|
| Soufre | 1,9 | 1,9 | 1,9 |

(1) EPDM (Vistalon 2504 de la société Exxon Mobil Chemical avec 57,5 % de motifs éthylène et 4,7 % de motifs ENB (ethylidène norbornène))
(2) Silice Z1165 MP de la société Rhodia
(3) Silice obtenue par le procédé de l'invention (exemple 2 cidessus)
(4) TESPT (Z-6940 de la société Dow Corning)
(5) Huile paraffinique (Sunpar 2280 de la société Sun Oil Company Alcan)
(6) N-1,3-diméthylbutyl-N-phényl-para-phénylènediamie (Santoflex 6-PPD de la société Flexsys)
(7) 2-mercaptobenzimidazole (Vulkanox MB/MG de la société Lanxess)
(8) 2-mercaptobenzothiazole (Rhénogran MBT-80 de la société RheinChemie)
(9) Dibutyldithiocarbamate de zinc (Rhénogran ZDBC-80 de la société RheinChemie)
(10) Disulfure de tétrabenzylthiurame (Rhénogran TBzTD-70 de la société RheinChemie).

**Procédé de préparation**

Chacune des compositions élastomériques est préparée en deux phases successives. Une première phase, dite non-productive, permet un travail thermomécanique à haute température (jusqu'à atteindre une température maximum comprise entre 130 et 160 °C). Elle est suivie d'une seconde phase de travail mécanique à des températures inférieures à 110 °C ; cette phase permet l'introduction du système de vulcanisation.

La première phase est réalisée dans un mélangeur interne de type Haake (capacité de 300 mL). Le coefficient de remplissage est de 0,75. La température initiale et la vitesse des rotors sont fixées à chaque fois de manière à atteindre des températures de tombée de mélange voisines de 130-160 °C.

Cette première phase permet d'incorporer l'élastomère puis la silice (introduction fractionnée) avec l'agent de couplage et l'acide stéarique, et ensuite l'oxyde de zinc, l'agent antioxydant et le MBI. La durée de cette phase est comprise entre 2 et 10 minutes.

Après refroidissement du mélange (température inférieure à 100 °C), la seconde phase, dite productive, permet l'introduction du système de vulcanisation (soufre et accélérateurs MBT, ZDBC, TBzTD). Elle est réalisée sur un mélangeur à cylindres, préchauffé à 50 °C. La durée de cette phase est comprise entre 5 et 10 minutes.

Chaque mélange final est ensuite calandré sous la forme de plaques d'épaisseur de 2-3 mm.

Sur les mélanges obtenus dits crus, une évaluation de leurs propriétés rhéologiques permet de mesurer la viscosité à crue et d'optimiser la durée et la température de vulcanisation.

Ensuite, les propriétés mécaniques et dynamiques des mélanges vulcanisés à l'optimum sont mesurées.

**Propriétés rhéologiques**

- **Viscosité des mélanges crus**

Comme précédemment, la consistance Mooney est mesurée sur les compositions à l'état cru à 100 °C au moyen d'un rhéomètre MV 2000 selon la norme NF T 43 005.

La valeur du couple lue au bout de 4 minutes après un préchauffage d'une minute (Mooney Large (1+4) à 100 °C) est indiquée dans le tableau XIV.

Tableau XIV

| Compositions | Témoin 4 | Comp. 3 | Comp. 4 |
|---|---|---|---|
| ML(1+4) - 100 °C | 46 | 43 | 51 |

On constate que :

- à même quantité de charge, la composition 3 contenant une silice obtenue par le procédé de l'invention présente une viscosité à crue inférieure à celle de la composition témoin contenant une silice de surface spécifique proche,
- à même dureté, la composition 3 contenant une silice obtenue par le procédé de l'invention présente une viscosité voisine de celle de la composition témoin.

- Rhéométrie des compositions

Les mesures sont réalisées comme précédemment à une température de 160 °C durant 30 minutes au moyen d'un rhéomètre ODR Monsanto 100 S selon la norme DIN 53529.

Les résultats obtenus sont indiqués dans le tableau XV.

Tableau XV

| Compositions | Témoin 4 | Comp. 3 | Comp. 4 |
|---|---|---|---|
| Cm (dN.m) | 7,5 | 6,6 | 7,9 |
| CM (dN.m) | 77,9 | 68,1 | 70,4 |
| Ts2 (min) | 2,3 | 2,3 | 2,3 |
| T90 (min) | 18,0 | 17,8 | 19,2 |
| Vret_max (dN.m/min) | 7,5 | 6,7 | 6,2 |

On constate que les compositions contenant une silice obtenue par le procédé de l'invention présentent un ensemble satisfaisant de propriétés rhéométriques, celles-ci étant proches voire meilleures que celles de la composition témoin, et ce à même quantité de silice engagée ou à même dureté.

**Propriétés mécaniques des vulcanisats**

Les mesures sont réalisées sur les compositions vulcanisées à l'optimum (t98) pour une température de 160 °C.

Les essais de traction uniaxiale sont réalisés conformément aux indications de la norme NF T 46002 avec des éprouvettes de type H2 à une vitesse de 500 mm/min sur un appareil INSTRON 5564.

La mesure de dureté Shore A des vulcanisats est réalisée selon les indications de la norme ASTM D2240.

Les propriétés mesurées sont rassemblées dans le tableau XVI.

Tableau XVI

| Compositions | Témoin 4 | Comp. 3 | Comp. 4 |
|---|---|---|---|
| Module 100 % (MPa) | 2,08 | 1,82 | 2,23 |
| Module 300 % (MPa) | 7,1 | 6,3 | 7,8 |
| Module 300 % / Module 100 % | 3,4 | 3,5 | 3,5 |
| | | | |
| Résistance rupture (MPa) | 14,0 | 13,5 | 16,0 |
| Allongement à la rupture (%) | 459,6 | 485,2 | 489,7 |
| | | | |
| Dureté Shore A - 15 s (pts) | 60 | 57 | 60 |

On constate que la silice obtenue par le procédé de l'invention présente un caractère renforçant satisfaisant et confère aux compositions élastomériques un comportement mécanique comparable (composition 3) voire supérieure (composition 4) à celui conféré par la silice témoin.

On constate qu'une augmentation du taux de charge de la silice obtenue par le procédé de l'invention (composition 4) permet d'atteindre une dureté identique à celle de la composition témoin, tout en améliorant son comportement en renforcement par rapport à cette dernière.

**Propriétés dynamiques des vulcanisats**

Les propriétés dynamiques sont mesurées comme précédemment au moyen d'un viscoanalyseur (Metravib VA3000), selon la norme ASTM D5992, en mode compression.

Les résultats, présentés dans le tableau XVII, sont le module complexe en compression (E* - 60 °C - 10 Hz) et le facteur de perte (tan $\delta$ - 60 °C - 10 Hz).

Tableau XVII

| Compositions | Témoin 4 | Comp. 3 | Comp. 4 |
|---|---|---|---|
| E* - 60 °C - 10 Hz | 8,7 | 7,0 | 8,3 |
| Tan $\delta$ - 60 °C - 10 Hz | 0,089 | 0,085 | 0,094 |

Puis, les propriétés dynamiques en mode cisaillement sont mesurées comme précédemment au moyen d'un viscoanalyseur (Metravib VA3000), selon la norme ASTM D5992, et les résultats sont indiqués dans le tableau XVIII.

Tableau XVIII

| Compositions | Témoin 4 | Comp. 3 | Comp. 4 |
|---|---|---|---|
| Tan $\delta$ max retour - 40 °C - 10 Hz | 0,171 | 0,146 | 0,164 |
| $\Delta$G' - 40 °C - 10 Hz | 2,38 | 1,45 | 2,14 |

Les compositions 3 et 4 contenant la silice obtenue par le procédé de l'invention présente de bonnes propriétés dynamiques, ce qui se révèle aussi particulièrement intéressant pour les propriétés des articles finis à base de ces compositions.

On constate que, à 40 °C et 60 °C, la valeur du facteur de perte ou tangente $\delta$ obtenue pour les compositions contenant la silice obtenue par le procédé de l'invention est, à même quantité de silice engagée (composition 3), améliorée par rapport à ce qui est obtenu pour la composition témoin, et ce indépendamment du mode de sollicitations dynamiques; et est, à même dureté (composition 4), comparable voire améliorée par rapport à ce qui est obtenu pour la composition témoin.

On constate également une réduction de la non-linéarité à 40 °C, associée à l'effet Payne ($\Delta$G'), avec la silice obtenue par le procédé de l'invention.

Ainsi, la silice obtenue par le procédé de l'invention permet l'obtention d'un compromis de propriétés rhéologiques, mécaniques et dynamiques, en particulier hystérétiques, en particulier un compromis hystérèse/renforcement, très satisfaisants, notamment par rapport à la silice témoin.

**Revendications**

1. Procédé de préparation de silice précipitée du type comprenant la réaction d'un silicate avec un agent acidifiant ce par quoi l'on obtient une suspension de silice, puis la séparation et le séchage de cette suspension, **caractérisé en ce que** la réaction du silicate avec l'agent acidifiant est réalisée de la manière suivante :

   (i) on met en contact une suspension aqueuse de silice précipitée, présentant un pH compris entre 2,5 et 5,3, de préférence entre 2,8 et 4,9, avec de l'agent acidifiant et du silicate, de telle manière que le pH du milieu réactionnel soit maintenu entre 2,5 et 5,3, de préférence entre 2,8 et 4,9,
   (ii) on ajoute dans le milieu réactionnel obtenu un agent alcalin, de préférence du silicate, et ce de manière à augmenter le pH du milieu réactionnel jusqu'à une valeur comprise entre 4,7 et 6,3, de préférence entre 5,0 et 5,8.

2. Procédé selon la revendication 1, **caractérisé en ce que** la suspension aqueuse utilisée dans l'étape (i) est obtenue de la manière suivante :

   (1) on forme un pied de cuve initial comportant du silicate et un electrolyte, la concentration en silicate (exprimée en $SiO_2$) dans ledit pied de cuve initial étant inférieure à 100 g/L, et, de préférence, la concentration en electrolyte dans ledit pied de cuve initial étant inférieure à 17 g/L,
   (2) on ajoute de l'agent acidifiant audit pied de cuve jusqu'à l'obtention d'une valeur du pH du milieu réactionnel d'au moins 7, de préférence comprise entre 7,5 et 8,5,
   (3) on ajoute au milieu réactionnel, simultanément, de l'agent acidifiant et du silicate,
   (4) on arrête l'addition du silicate tout en continuant l'addition de l'agent acidifiant dans le milieu réactionnel, jusqu'à l'obtention d'une valeur du pH du milieu réactionnel comprise entre 2,5 et 5,3, de préférence entre 2,8 et 4,9.

3. Procédé selon l'une des revendications 1 à 2, **caractérisé en ce que** l'on procède à une étape de mûrissement à l'issue de l'étape (ii).

4. Procédé selon l'une des revendications 1 à 3, **caractérisé en ce que**, dans l'étape (i), on ajoute à ladite suspension aqueuse de silice précipitée d'abord l'agent acidifiant, puis le silicate.

5. Procédé selon l'une des revendications 1 à 3, **caractérisé en ce que**, dans l'étape (i), on ajoute simultanément l'agent acidifiant et le silicate à ladite suspension aqueuse de silice précipitée, de préférence le pH du milieu réactionnel restant sensiblement constant.

6. Procédé selon l'une des revendications 1 à 5, **caractérisé en ce que** l'étape (i) est réalisée dans un mélangeur rapide ou dans une zone d'écoulement turbulent.

7. Procédé selon la revendication 6, **caractérisé en ce que**, dans l'étape (i), on met en œuvre un mélangeur rapide choisi parmi les mélangeurs (ou tubes) en T ou en Y symétriques, les mélangeurs (ou tubes) en T ou en Y asymétriques, les mélangeurs à jets tangentiels, les mélangeurs Hartridge-Roughton, les mélangeurs vortex, les mélangeurs rotor-stators.

8. Procédé selon l'une des revendications 1 à 7, **caractérisé en ce que** le séchage est effectué par atomisation.

**Patentansprüche**

1. Verfahren zur Herstellung von gefälltem Siliciumdioxid des Typs, welcher die Reaktion eines Silicats mit einem Säuerungsmittel, wodurch eine Siliciumdioxidsuspension erhalten wird, danach die Trennung und die Trocknung dieser Suspension beinhaltet, **dadurch gekennzeichnet, dass** die Reaktion des Silicats mit dem Säuerungsmittel auf folgende Weise durchgeführt wird:

(i) eine wässrige Suspension von gefälltem Siliciumdioxid, die einen pH-Wert zwischen 2,5 und 5,3, vorzugsweise zwischen 2,8 und 4,9, aufweist, wird mit Säuerungsmittel und Silicat in Kontakt gebracht, derart, dass der pH-Wert des Reaktionsmediums zwischen 2,5 und 5,3, vorzugsweise zwischen 2,8 und 4,9, gehalten wird,
(ii) dem erhaltenen Reaktionsmedium wird ein alkalisches Mittel, vorzugsweise Silicat, zugegeben, und zwar derart, dass der pH-Wert des Reaktionsmediums auf einen Wert zwischen 4,7 und 6,3, vorzugsweise zwischen 5,0 und 5,8, erhöht wird.

2. Verfahren nach Anspruch 1, **dadurch gekennzeichnet, dass** die wässrige Suspension, die in Schritt (i) verwendet wird, auf folgende Weise gewonnen wird:

(1) es wird ein Ausgangsansatz gebildet, der Silicat und einen Elektrolyten enthält, wobei die Konzentration von Silicat (ausgedrückt als $SiO_2$) in dem Ausgangsansatz niedriger als 100 g/l ist und vorzugsweise die Konzentration von Elektrolyt in dem Ausgangsansatz niedriger als 17 g/l ist,
(2) dem Ansatz wird Säuerungsmittel zugegeben, bis ein pH-Wert des Reaktionsmediums von wenigstens 7, vorzugsweise zwischen 7,5 und 8,5, erreicht wird,
(3) dem Reaktionsmedium werden gleichzeitig Säuerungsmittel und Silicat zugegeben,
(4) die Zugabe des Silicats wird beendet, während die Zugabe des Säuerungsmittels in dem Reaktionsmedium fortgesetzt wird, bis ein pH-Wert des Reaktionsmediums zwischen 2,5 und 5,3, vorzugsweise zwischen 2,8 und 4,9, erreicht wird.

3. Verfahren nach einem der Ansprüche 1 bis 2, **dadurch gekennzeichnet, dass** nach dem Schritt (ii) ein Schritt der Reifung durchgeführt wird.

4. Verfahren nach einem der Ansprüche 1 bis 3, **dadurch gekennzeichnet, dass** in Schritt (i) der wässrigen Suspension von gefälltem Siliciumdioxid zuerst das Säuerungsmittel und danach das Silicat zugegeben wird.

5. Verfahren nach einem der Ansprüche 1 bis 3, **dadurch gekennzeichnet, dass** in Schritt (i) der wässrigen Suspension von gefälltem Siliciumdioxid gleichzeitig das Säuerungsmittel und das Silicat zugegeben werden, wobei vorzugsweise der pH-Wert des Reaktionsmediums im Wesentlichen konstant bleibt.

6. Verfahren nach einem der Ansprüche 1 bis 5, **dadurch gekennzeichnet, dass** Schritt (i) in einem Schnellmischer oder in einem Bereich turbulenter Strömung durchgeführt wird.

7. Verfahren nach Anspruch 6, **dadurch gekennzeichnet, dass** in Schritt (i) ein Schnellmischer eingesetzt wird, der aus den symmetrischen T- oder Y-Mischern (oder Rohren), den asymmetrischen T- oder Y-Mischern (oder Rohren), den Mischern mit Tangentialdüsen, den auf dem Verfahren von Hartridge und Roughton basierenden Mischern, den Wirbelmischern und den Rotor-Stator-Mischern ausgewählt ist.

8. Verfahren nach einem der Ansprüche 1 bis 7, **dadurch gekennzeichnet, dass** die Trocknung durch Zerstäubung durchgeführt wird.

**Claims**

1. Process for the preparation of precipitated silica of the type comprising the reaction of a silicate with an acidifying agent, resulting in a silica suspension being obtained, and then the separation and the drying of this suspension, **characterized in that** the reaction of the silicate with the acidifying agent is carried out in the following way:

    (i) an aqueous suspension of precipitated silica, exhibiting a pH of between 2.5 and 5.3, preferably between 2.8 and 4.9, is brought into contact with acidifying agent and silicate in such a way that the pH of the reaction medium is maintained between 2.5 and 5.3, preferably between 2.8 and 4.9,
    (ii) an alkaline agent, preferably silicate, is added to the reaction medium obtained, so as to increase the pH of the reaction medium up to a value of between 4.7 and 6.3, preferably between 5.0 and 5.8.

2. Process according to Claim 1, **characterized in that** the aqueous suspension used in stage (i) is obtained in the following way:

    (1) an initial vessel heel comprising silicate and an electrolyte is formed, the concentration of silicate (expressed as $SiO_2$) in the said initial vessel heel being less than 100 g/l and, preferably, the concentration of electrolyte in the said initial vessel heel being less than 17 g/l,
    (2) acidifying agent is added to the said vessel heel until a value for the pH of the reaction medium of at least 7, preferably of between 7.5 and 8.5, is obtained,
    (3) acidifying agent and silicate are added simultaneously to the reaction medium,
    (4) the addition of the silicate is halted while continuing the addition of the acidifying agent to the reaction medium, until a value for the pH of the reaction medium of between 2.5 and 5.3, preferably between 2.8 and 4.9, is obtained.

3. Process according to either of Claims 1 and 2, **characterized in that** a maturing stage is carried out on conclusion of stage (ii).

4. Process according to one of Claims 1 to 3, **characterized in that**, in stage (i), first the acidifying agent and then the silicate are added to the said aqueous suspension of precipitated silica.

5. Process according to one of Claims 1 to 3, **characterized in that**, in stage (i), the acidifying agent and the silicate are added simultaneously to the said aqueous suspension of precipitated silica, the pH of the reaction medium preferably remaining substantially constant.

6. Process according to one of Claims 1 to 5, **characterized in that** stage (i) is carried out in a rapid mixer or in a turbulent flow region.

7. Process according to Claim 6, **characterized in that**, in stage (i), use is made of a rapid mixer chosen from symmetrical T- or Y-mixers (or tubes), asymmetrical T or Y-mixers (or tubes), tangential jet mixers, Hartridge-Roughton mixers, vortex mixers or rotor-stator mixers.

8. Process according to one of Claims 1 to 7, **characterized in that** the drying is carried out by atomization.

Figure 1

1ère intrusion

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2710629 A
- WO 9928376 A
- WO 9928380 A
- WO 0073372 A
- WO 0073373 A

**Littérature non-brevet citée dans la description**

- *The journal of the American Chemical Society,* Février 1938, vol. 60, 309
- **GUINIER A. ; FOURNET G.** Small Angle Scattering of X rays. Wiley, 1955
- **GLATTER O. ; KRATTKY O.** Small Angle X Ray Scattering. Academic Press, 1982
- **SPALLA O. ; LYONNARD S. ; TESTARD F.** Analysis of the Small-Angle Intensity Scattered by a Porous and Granular Medium. *J. Appl. Cryst.,* 2003, vol. 36, 338-347